# EUROPEAN PATENT SPECIFICATION

(11) **EP 4 173 341 B1**
(45) Date of publication and mention of the grant of the patent: **20.05.2026**
(21) Application number: 20845827.3
(22) Date of filing: 28.12.2020
(51) Int. Cl.: H04W 16/14, H04W 72/12

(54) **DEVICE ACCESS IN UNLICENSED BAND**
GERÄTEZUGRIFF IN NICHT LIZENZIERTER BAND
DISPOSITIF D'ACCÈS DANS UNE BANDE SANS LICENCE

(30) Priority: 24.06.2020 GR 20200100371
(43) Date of publication of application: 03.05.2023
(73) Proprietor: QUALCOMM INCORPORATED, San Diego, California 92121-1714 (US)
(72) Inventor: STEFANATOS, Stelios, San Diego, California 92121-1714 (US); GUBESKYS, Arthur, San Diego, California 92121-1714 (US); WU, Shuanshuan, San Diego, California 92121-1714 (US)
(74) Representative: Tomkins & Co
(86) International application number: PCT/US2020/067157
(87) International publication number: WO 2021/262237

(56) References cited:
- US-A1- 2015 312 793
- US-A1- 2016 021 679
- US-A1- 2016 073 344

## Description

### Cross-Reference to Related Applications

This application claims benefit of and priority to Greek Patent Application No. 20200100371, filed June 24, 2020.

### INTRODUCTION

Aspects of the present disclosure relate to wireless communications, and more particularly, to techniques for reserving intervals of time for wireless communication between certain devices.

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. These improvements may also be applicable to other multi-access technologies and the telecommunication standards that employ these technologies.
Document US 2016/021679 A1 discloses an example of the prior art.
Document US 2015/312793 A1 discloses another example of the prior art.
Document US 2016/073344 A1 discloses another example of the prior art.

### SUMMARY

The systems, methods, and devices of the disclosure each have several aspects, no single one of which is solely responsible for its desirable attributes. After considering this discussion, and particularly after reading the section entitled "Detailed Description" one will understand how the features of this disclosure provide advantages.

Certain aspects relate to a method of wireless communication by a first user equipment. In some examples, the method includes, measuring, by the first UE, starting at least at a start time of a time interval, a frequency band to determine whether the frequency band is idle, the time interval including a plurality of time periods. In some examples, the method includes, while measuring the frequency band, decoding, by the first UE, any signals received on the frequency band to determine if a clear-to-send (CTS) signal is received over the frequency band. In some examples, the method includes, when a CTS signal is received from one or more of a plurality of UEs at a first time within the time interval, refraining from further measuring the frequency band to determine whether the frequency band is idle for a remaining portion of the time interval after the first time, the first time being within a first time period of the plurality of time periods. In some examples, the method includes, when a CTS signal is not received from one or more of the plurality of UEs within the time interval, transmitting, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval.

Certain aspects relate to a first user equipment (UE). In some examples, the apparatus includes a memory and a processor coupled to the memory. In some examples, the processor and the memory are configured to measure, starting at least at a start time of a time interval, a frequency band starting to determine whether the frequency band is idle, the time interval including a plurality of time periods. In some examples, the processor and the memory are configured to, decode, while measuring the frequency band, any signals received on the frequency band to determine if a clear-to-send (CTS) signal is received over the frequency band. In some examples, the processor and the memory are configured to, when a CTS signal is received from one or more of a plurality of UEs at a first time within the time interval, refrain from further measuring the frequency band to determine whether the frequency band is idle for a remaining portion of the time interval after the first time, the first time being within a first time period of the plurality of time periods. In some examples, the processor and the memory are configured to, when a CTS signal is not received from one or more of the plurality of UEs within the time interval, transmit, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval.

Certain aspects relate to a first user equipment (UE) for wireless communication. In some examples, the apparatus includes means for means for measuring, starting at least at a start time of a time interval, a frequency band to determine whether the frequency band is idle, the time interval including a plurality of time periods. In some examples, the apparatus includes, means for decoding, while measuring the frequency band, any signals received on the frequency band to determine if a clear-to-send (CTS) signal is received over the frequency band. In some examples, the apparatus includes, when a CTS signal is received from one or more of a plurality of UEs at a first time within the time interval, means for refraining from further measuring the frequency band to determine whether the frequency band is idle for a remaining portion of the time interval after the first time, the first time being within a first time period of the plurality of time periods. In some examples, the apparatus includes, when a CTS signal is not received from one or more of the plurality of UEs within the time interval, means for transmitting, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval.

Certain aspects relate to non-transitory computer-readable storage medium for wireless communications implemented by a first UE. In some examples, the non-transitory computer-readable storage medium includes code for measuring, by the first UE, starting at least at a start time of a time interval, a frequency band to determine whether the frequency band is idle, the time interval including a plurality of time periods. In some examples, the non-transitory computer-readable storage medium includes code for, while measuring the frequency band, decoding, by the first UE, any signals received on the frequency band to determine if a clear-to-send (CTS) signal is received over the frequency band. In some examples, the non-transitory computer-readable storage medium includes code for, when a CTS signal is received from one or more of a plurality of UEs at a first time within the time interval, refraining from further measuring the frequency band to determine whether the frequency band is idle for a remaining portion of the time interval after the first time, the first time being within a first time period of the plurality of time periods. In some examples, the non-transitory computer-readable storage medium includes code for, when a CTS signal is not received from one or more of the plurality of UEs within the time interval, transmitting, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain aspects of this disclosure and are therefore not to be considered limiting of its scope, for the description may admit to other equally effective aspects.
**FIG. 1** is a block diagram conceptually illustrating an example telecommunications system, in accordance with certain aspects of the present disclosure.
**FIG. 2** is a block diagram conceptually illustrating a design of two example user equipment (UEs), in accordance with certain aspects of the present disclosure.
**FIG. 3** is a diagram conceptually illustrating an example of a first UE communicating with one or more other UEs according to aspects of the present disclosure.
**FIG. 4** is a diagram illustrating an example frame format, in accordance with certain aspects of the present disclosure.
**FIG. 5** is a schematic diagram illustrating an example model of multiple wireless devices operating in an unlicensed spectrum, in accordance with certain aspects of the present disclosure.
**FIG. 6** is a signal diagram illustrating a series of example cases in which randomness induced by a listen before talk (LBT) function performed by one of the CV2X devices of FIG. 5 may be encountered, in accordance with certain aspects of the present disclosure.
**FIG. 7** is a signal diagram illustrating an example timeline of communication by the CV2X devices of FIG. 5, in accordance with certain aspects of the present disclosure.
**FIG. 8** is a signal diagram illustrating an example timeline of CV2X window reservation by the CV2X devices, in accordance with certain aspects of the present disclosure.
**FIG. 9** is a signal diagram illustrating an example timeline of CV2X window reservation by the CV2X devices, in accordance with certain aspects of the present disclosure.
**FIG. 10** is a signal diagram illustrating an example timeline of CV2X window reservation by the CV2X devices, in accordance with certain aspects of the present disclosure.
**FIG. 11** is a signal diagram illustrating an example timeline of CV2X window reservation by the CV2X devices, in accordance with certain aspects of the present disclosure.
**FIG. 12** is a signal diagram illustrating an example timeline of CV2X window reservation by the CV2X devices, in accordance with certain aspects of the present disclosure.
**FIG. 13** is a signal diagram illustrating an example timeline of CV2X window reservation by the CV2X device, in accordance with certain aspects of the present disclosure.
**FIG. 14** is a signal diagram illustrating an example timeline of CV2X window reservation by the CV2X devices, in accordance with certain aspects of the present disclosure.
**FIG. 15** is a signal diagram illustrating an example timeline of time-division multiple access (TDMA) window configuration, in accordance with certain aspects of the present disclosure.
**FIG. 16** is a flow diagram illustrating example operations for wireless communication, in accordance with certain aspects of the present disclosure.
**FIG. 17** illustrates a communications device that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for facilitating communications between wireless devices. For example, techniques described herein may relate to communicating over a frequency band using time-division multiple access (TDMA) techniques to partition time into a first window and a second window. In some examples, a first group of wireless devices are configured to communicate during the first window, and a second group of wireless devices are configured to communicate during the second window. According to one or more examples, the use of separate windows provides the two different groups of devices with fair use of the frequency band.

In some examples, the first group of wireless devices may be configured to perform a listen-before-talk (LBT) sensing procedure prior to the first window to determine whether the frequency band is idle, or if there is too much interference caused by other wireless devices. The wireless devices may be pre-configured for LBT, or may be configured by one or more of a core network (CN) or a base station (BS) of a radio access network (RAN). If the frequency band is determined to be idle, the first group of wireless devices may transmit a clear-to-send (CTS) signal to alert other devices in the first group of a start of the first window. In some examples, the CTS signal may be configured to notify the second group of devices of the duration of the first window. Accordingly, the second group of wireless communication devices refrain from communicating during the first window of time. Once the first window of time ends, the second window of time begins, and the first group of wireless devices cease communications. This allows the second group of devices to communicate during the second window of time. In one example, the first group of wireless devices can enforce TDMA-based partitions in time that allow for fair use of the frequency band between the first group and the second group of wireless devices.

Such techniques may be used, for example, in sidelink communications between wireless communication devices. In other examples, the wireless communication devices may include cellular vehicle-to-everything (CV2X) devices. It should be noted that though certain aspects are described with respect to CV2X devices and communication in the unlicensed band, it can be appreciated that the aspects may similarly be applicable to other scenarios, such as any communications (e.g., sidelink communications) in an unlicensed band, communications (e.g., sidelink communications) in a licensed band, etc.

The following description provides examples of techniques for reserving windows of time for TDMA-based transmissions in an unlicensed spectrum. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a subchannel (e.g., a group of subcarriers), a frequency band, a tone, a subband, etc. Each frequency may support a single RAT in a given geographic area in order to avoid interference between wireless networks of different RATs.

The techniques described herein may be used for various wireless networks and radio technologies. While aspects may be described herein using terminology commonly associated with 3G, 4G, and/or new radio (e.g., 5G NR) wireless technologies, aspects of the present disclosure can be applied in other generation-based communication systems.

NR access may support various wireless communication services, such as enhanced mobile broadband (eMBB) targeting wide bandwidth (e.g., 80 MHz or beyond), millimeter wave (mmW) targeting high carrier frequency (e.g., 25 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may coexist in the same subframe.

NR supports beamforming and beam direction which may be dynamically configured. MIMO transmissions with precoding may also be supported. In some examples, MIMO configurations in the DL may support up to 8 transmit antennas with multi-layer DL transmissions up to 8 streams and up to 2 streams per UE. In some examples, multi-layer transmissions with up to 2 streams per UE may be supported. In some examples, aggregation of multiple cells may be supported with up to 8 serving cells. It should be noted that the foregoing are example ranges, and any suitable MIMO configuration is supported in this disclosure.

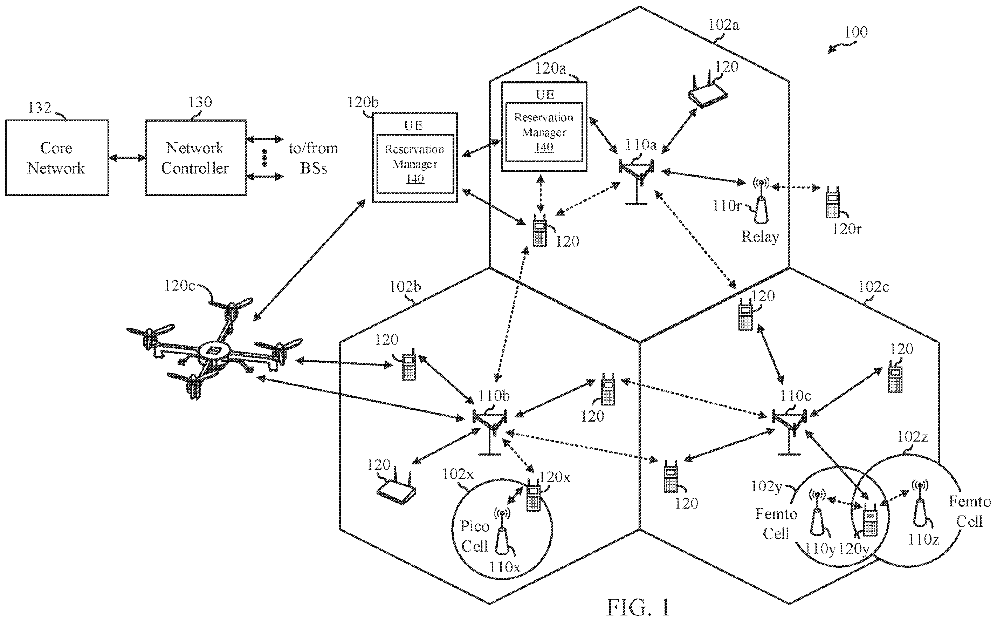

**FIG. 1** illustrates an example wireless communication network 100 in which aspects of the present disclosure may be performed. For example, the wireless communication network 100 may be an NR system (e.g., a 5G NR network). As shown in **FIG. 1****,** the wireless communication network 100 may be in communication with a core network (CN) 132. The CN 132 may in communication with one or more base station (BSs) 110 and/or user equipment (UE) 120 in the wireless communication network 100 via one or more interfaces.

As illustrated in **FIG. 1****,** the wireless communication network 100 may include a number of BSs 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another and/or to one or more other BSs or network nodes (not shown) in wireless communication network 100 through various types of backhaul interfaces (e.g., a direct physical connection, a wireless connection, a virtual network, or the like) using any suitable transport network. In the example shown in **FIG. 1****,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells. A network controller 130 may communicate with a set of BSs 110 and provide coordination and control for these BSs 110 (e.g., via a backhaul).

The BSs 110 communicate with UEs 120a-y (each also individually referred to herein as UE 120 or collectively as UEs 120) in the wireless communication network 100. The UEs 120 (e.g., 120c, 120x, 120y, etc.) may be dispersed throughout the wireless communication network 100, and each UE 120 may be stationary or mobile. In one example, a quadcopter, drone, or any other unmanned aerial vehicle (UAV) or remotely piloted aerial system (RPAS) 120c may be configured to function as a UE. Wireless communication network 100 may also include relay stations (e.g., relay station 110r), also referred to as relays or the like, that receive a transmission of data and/or other information from an upstream station (e.g., a BS 110a or a UE 120r) and send a transmission of the data and/or other information to a downstream station (e.g., a UE 120 or a BS 110), or that relay transmissions between UEs 120, to facilitate communication between devices.

In some examples of the wireless communication network 100, sidelink communication may be established between UEs and/or BSs without necessarily relying on UE ID or control information from a base station. For example, UE 120a may initiate a sidelink communication with UE 120b without relying on a direct connection with a base station (e.g., base station 110a), such as if the UE 120b is outside of cell 102a's range. Any of the UEs illustrated in **FIG. 1** may function as a scheduling entity or a primary sidelink device, while the other UEs may function as a subordinate entity or a non-primary (e.g., secondary) sidelink device. Further, the UEs may be configured to transmit synchronization signaling for sidelink as described throughout the disclosure. Accordingly, one or more of the UEs may function as a scheduling entity in a device-to-device (D2D), peer-to-peer (P2P), or vehicle-to-vehicle (V2V) network, and/or in a mesh network to initiate and/or schedule synchronization signaling.

According to certain aspects, UEs 120 may be configured for transmitting and receiving clear-to-send (CTS) signals over a wireless interface, such as in one or more unlicensed frequency bands. As shown in **FIG. 1****,** a first UE 120a and a second UE 120b include a reservation manager 140. The reservation manager 140 is configured to measure, starting at least at a start time of a time interval, a frequency band to determine whether the frequency band is idle, the time interval including a plurality of time periods. While measuring the frequency band, the reservation manager 140 may also be configured to decode any signals received on the frequency band to determine if a clear-to-send (CTS) signal is received over the frequency band. When a CTS signal is received from one or more of a plurality of UEs at a first time within the time interval, the reservation manager 140 may cause the first UE 120a and/or second UE 120b to refrain from further measuring the frequency band to determine whether the frequency band is idle for a remaining portion of the time interval after the first time, the first time being within a first time period of the plurality of time periods. When a CTS signal is not received from one or more of the plurality of UEs within the time interval, the reservation manager 140 may cause the first UE 120a and/or second UE 120b to transmit, within the time interval, a first CTS signal to the plurality of UEs and one or more other wireless devices, the first CTS signal indicating to the one or more other wireless devices that the frequency band is busy during the time interval, wherein the first UE 120a wirelessly communicates with one or more of the plurality of UEs over the frequency band during the time interval.

As used herein, the term "idle" is meant to describe the noise or interfering signals on a frequency band as being undetectable by a UE 120, or detectable but below a threshold level of power as received by the UE 120 (e.g., a relatively low reference signal receive power (RSRP), received signal strength indicator (RSSI), or any other suitable metric). As used herein, the term "busy" is meant to describe the noise or interfering signals on a frequency band as being detectable by a UE 120, or detectable and above a threshold level of power as received by the UE 120 (e.g., a relatively high RSSI).

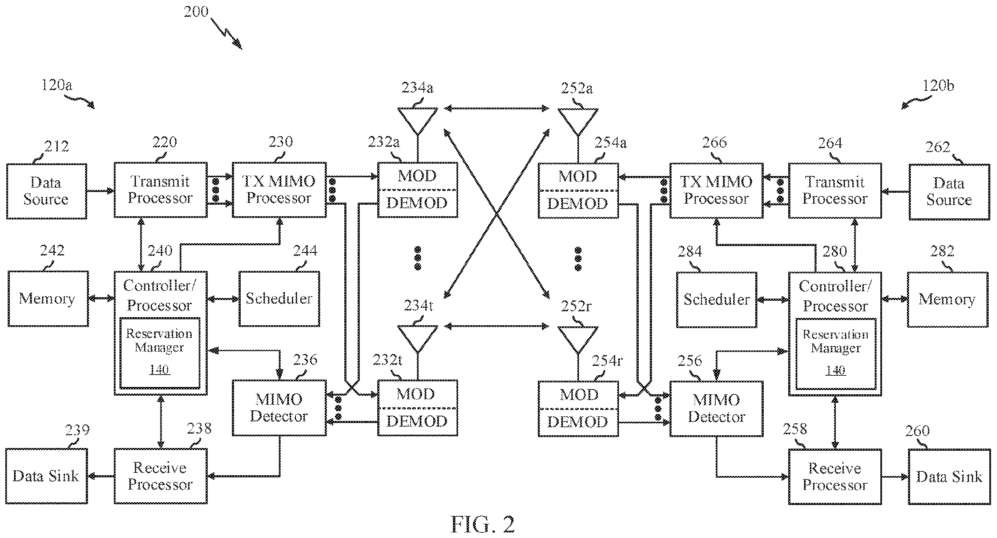

**FIG. 2** illustrates example components 200 of a first UE 120a and a second UE 120b (e.g., in the wireless communication network 100 of **FIG. 1**), which may be used to implement aspects of the present disclosure.

At the first UE 120a, a transmit processor 220 may receive data from a data source 212 and control information from a controller/processor 240. The control information may be for the physical broadcast channel (PBCH), physical sidelink broadcast channel (PSBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), physical sidelink shared channel (PSSCH), etc. A medium access control (MAC)-control element (MAC-CE) is a MAC layer communication structure that may be used for control command exchange between wireless nodes. The MAC-CE may be carried in a shared channel such as a physical downlink shared channel (PDSCH), a physical uplink shared channel (PUSCH), or a physical sidelink shared channel (PSSCH).

The processor 220 may process (e.g., encode and symbol map) the data and control information to obtain data symbols and control symbols, respectively. The transmit processor 220 may also generate reference symbols, such as for the primary synchronization signal (PSS), secondary synchronization signal (SSS), and channel state information reference signal (CSI-RS). A transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) 232a-232t. Each modulator 232 may process a respective output symbol stream (e.g., for OFDM, etc.) to obtain an output sample stream. Each modulator may further process (e.g., convert to analog, amplify, filter, and upconvert) the output sample stream to obtain a signal. Signals from modulators 232a-232t may be transmitted via the antennas 234a-234t, respectively.

At the second UE 120b, the antennas 252a-252r may receive signals from the first UE 120a and may provide the received signals to the demodulators (DEMODs) in transceivers 254a-254r, respectively. Each demodulator 254 may condition (e.g., filter, amplify, downconvert, and digitize) a respective received signal to obtain input samples. Each demodulator may further process the input samples (e.g., for OFDM, etc.) to obtain received symbols. A MIMO detector 256 may obtain received symbols from all the demodulators 254a-254r, perform MIMO detection on the received symbols if applicable, and provide detected symbols. A receive processor 258 may process (e.g., demodulate, deinterleave, and decode) the detected symbols, provide decoded data to a data sink 260, and provide decoded control information to a controller/processor 280.

At the second UE 120b, a transmit processor 264 may receive and process data from a data source 262 and control information from the controller/processor 280. The transmit processor 264 may also generate reference symbols for a reference signal (e.g., for the sounding reference signal (SRS)). The symbols from the transmit processor 264 may be precoded by a TX MIMO processor 266 if applicable, further processed by the modulators in transceivers 254a-254r (e.g., for SC-FDM, etc.), and transmitted to the first UE 120a. At the first UE 120a, signals from the second UE 120b may be received by the antennas 234, processed by the modulators 232, detected by a MIMO detector 236 if applicable, and further processed by a receive processor 238 to obtain decoded data and control information sent by the second UE 120b. The receive processor 238 may provide the decoded data to a data sink 239 and the decoded control information to the controller/processor 240.

The memories 242 and 282 may store data and program codes for the first UE 120a and second UE 120b, respectively. A scheduler 244/284 may schedule UEs for data transmission/reception.

Antennas 252, processors 266, 258, 264, and/or controller/processor 280 of the second UE 120b and/or antennas 234, processors 220, 230, 238, and/or controller/processor 240 of the first UE 120a may be used to perform the various techniques and methods described herein. For example, as shown in **FIG. 2****,** the controller/processor of both UEs includes a reservation manager 140. The reservation manager 140 is configured to measure, starting at least at a start time of a time interval, a frequency band to determine whether the frequency band is idle, the time interval including a plurality of time periods. While measuring the frequency band, the reservation manager 140 may also be configured to decode any signals received on the frequency band to determine if a clear-to-send (CTS) signal is received over the frequency band. When a CTS signal is received from one or more of a plurality of UEs at a first time within the time interval, the reservation manager 140 may cause the first UE 120a and/or the second UE 120b to refrain from further measuring the frequency band to determine whether the frequency band is idle for a remaining portion of the time interval after the first time, the first time being within a first time period of the plurality of time periods. When a CTS signal is not received from one or more of the plurality of UEs within the time interval, the reservation manager 140 may cause the first UE 120a and/or the second UE 120b to transmit, within the time interval, a first CTS signal to the plurality of UEs and one or more other wireless devices, the first CTS signal indicating to the one or more other wireless devices that the frequency band is busy during the time interval, wherein the first UE 120a and/or second UE 120b wirelessly communicates with one or more of the plurality of UEs over the frequency band during the time interval.

NR may utilize orthogonal frequency division multiplexing (OFDM) with a cyclic prefix (CP). NR may support half-duplex operation using time division duplexing (TDD). OFDM and single-carrier frequency division multiplexing (SC-FDM) partition the system bandwidth into multiple orthogonal subcarriers, which are also commonly referred to as tones, bins, etc. Each subcarrier may be modulated with data. Modulation symbols may be sent in the frequency domain with OFDM and in the time domain with SC-FDM. The spacing between adjacent subcarriers may be fixed, and the total number of subcarriers may be dependent on the system bandwidth. The minimum resource allocation, called a resource block (RB), may be 12 consecutive subcarriers. The system bandwidth may also be partitioned into subbands. For example, a subband may cover multiple RBs. NR may support a base subcarrier spacing (SCS) of 15 KHz and other SCS may be defined with respect to the base SCS (e.g., 30 kHz, 60 kHz, 120 kHz, 240 kHz, etc.).

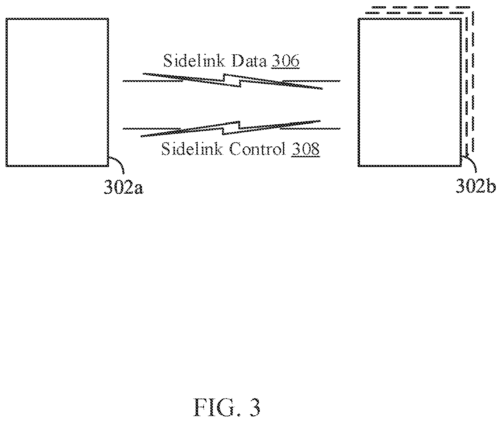

**FIG. 3** is a diagram conceptually illustrating a sidelink communication between a first UE 302a and one or more second UEs 302b (collectively, "UEs 302"). In various examples, any one of the first UE 302a and the second UE 302b may correspond to a UE (e.g., UE 120a or UE 120b of **FIGs. 1** and **2**) or other suitable node in the wireless communication network 100.

In some examples, the first UE 302a and the second UE 302b may utilize sidelink signals for direct D2D communication. The D2D communication may use the downlink/uplink WWAN spectrum and/or an unlicensed spectrum. The D2D communication may use one or more sidelink channels (e.g., frequency bands), such as a physical sidelink broadcast channel (PSBCH), a physical sidelink discovery channel (PSDCH), a physical sidelink shared channel (PSSCH), and a physical sidelink control channel (PSCCH) over these spectrums. D2D communication may be through a variety of wireless D2D communications systems, such as for example, FlashLinQ, WiMedia, Bluetooth, ZigBee, Wi-Fi based on the IEEE 802.11 standard, LTE, or NR.

Sidelink signals may include sidelink data 306 (i.e., sidelink traffic) and sidelink control information 308. Broadly, the first UE 302a and one or more second UEs 302b may communicate sidelink data 306 and sidelink control information 308 using one or more data channels and control channels. In some aspects, data channels include the PSSCH, and control channels include the PSCCH and/or physical sidelink feedback channel (PSFCH).

Sidelink control information 308 may include a source transmit signal (STS), a direction selection signal (DSS), and a destination receive signal (DRS). The DSS/STS may provide for a UE 302 (e.g., 302a, 302b) to request a duration of time to keep a sidelink channel available for a sidelink signal; and the DRS may provide for the UE 302 to indicate the availability of the sidelink channel, e.g., for a requested duration of time. Accordingly, the first UE 302a and the second UE 302b may negotiate the availability and use of sidelink channel resources prior to communication of sidelink data 306 information.

In some configurations, any one or more of the first UE 302a or the second UE 302b may periodically/aperiodically transmit or broadcast sidelink synchronization signaling to increase chances of detection by another UE or BS. For example, one or more of the first UE 302a and the second UE 302b may periodically/aperiodically transmit sidelink synchronization signals in one or more slots of specific time windows. In some examples, the UEs are configured (e.g., by CN 132 or a BS 110) or pre-configured with information indicating the location and duration of the time window within a frame (e.g., which slots within the frame, and how many). In some aspects, the UEs may be configured (e.g., by CN 132 or a BS 110) or pre-configured with the location and duration of the time window via messaging between UEs or messaging received from a BS (e.g., radio resource control (RRC) signaling).

The channels or carriers used for transmitting the sidelink data 306 and the sidelink control information 308 illustrated in **FIG. 3** are not necessarily all of the channels or carriers that may be utilized between a first UE 302a and a second UE 302b in a sidelink communication, and those of ordinary skill in the art will recognize that other channels or carriers may be utilized in addition to those illustrated, such as other data, control, and feedback channels.

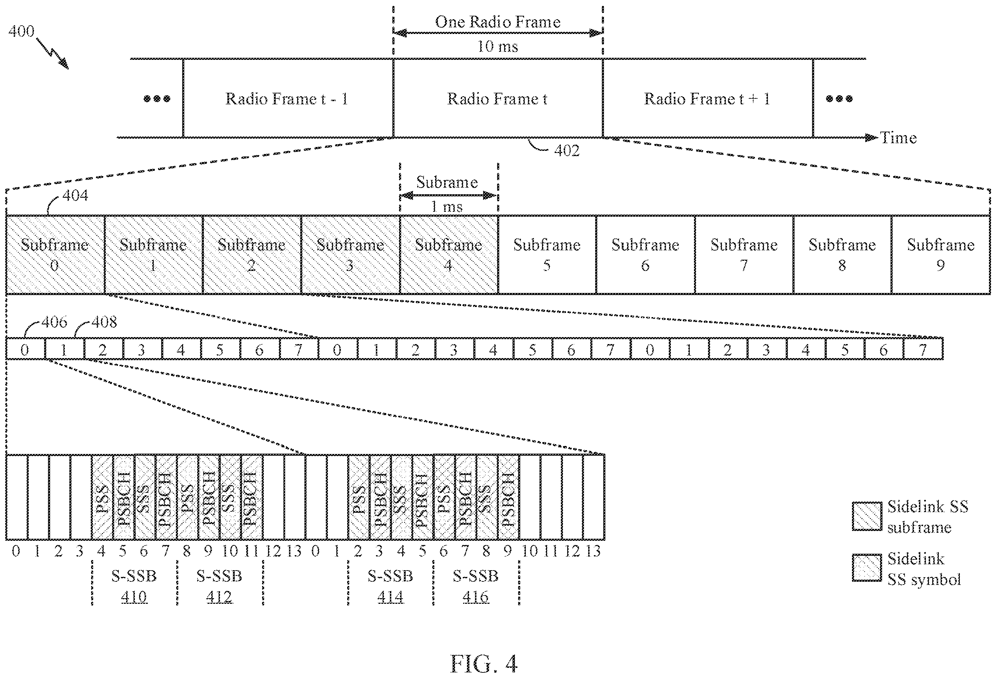

**FIG. 4** is a diagram showing an example of a frame format 400. The transmission timeline for each data transmission and reception may be partitioned into units of radio frames 402. In NR, the basic transmission time interval (TTI) may be referred to as a slot. In NR, a subframe may contain a variable number of slots (e.g., 1, 2, 4, 8, 16, ..., N slots) depending on the subcarrier spacing (SCS). NR may support a base SCS of 15 KHz and other SCS may be defined with respect to the base SCS (e.g., 30 kHz, 60 kHz, 120 kHz, 240 kHz, etc.). In the example shown in **FIG. 4****,** the SCS is 120 kHz. As shown in **FIG. 4****,** the subframe 404 (subframe 0) contains 8 slots (slots 0, 1, ..., 7) with a 0.125 ms duration. The symbol and slot lengths scale with the subcarrier spacing. Each slot may include a variable number of symbol (e.g., OFDM symbols) periods (e.g., 7 or 14 symbols) depending on the SCS. For the 120 kHz SCS shown in **FIG. 4****,** each of the slot 406 (slot 0) and slot 408 (slot 1) includes 14 symbol periods (slots with indices 0, 1, ..., 13) with a 0.25 ms duration.

In sidelink, a sidelink synchronization signal block (S-SSB), referred to as the SS block or SSB, is transmitted. The SSB may include a primary SS (PSS), a secondary SS (SSS), and/or a two symbol physical sidelink broadcast channel (PSBCH). In some examples, the SSB can be transmitted up to sixty-four times with up to sixty-four different beam directions. The up to sixty-four transmissions of the SSB are referred to as the SS burst set. SSBs in an SS burst set may be transmitted in the same frequency region, while SSBs in different SS bursts sets can be transmitted in different frequency regions.

In the example shown in **FIG. 4****,** in the subframe 404, SSB is transmitted in each of the slots (slots 0, 1, ..., 7). In the example shown in **FIG. 4****,** in the slot 406 (slot 0), an SSB 410 is transmitted in the symbols 4, 5, 6, 7 and an SSB 412 is transmitted in the symbols 8, 9, 10, 11, and in the slot 408 (slot 1), an SSB 414 is transmitted in the symbols 2, 3, 4, 5 and an SSB 416 is transmitted in the symbols 6, 7, 8, 9, and so on. The SSB may include a primary SS (PSS), a secondary (SSS), and a two symbol physical sidelink broadcast channel (PSBCH). The PSS and SSS may be used by UEs to establish sidelink communication (e.g., transmission and/or reception of data and/or control channels). The PSS may provide half-frame timing, the SS may provide cyclic prefix (CP) length and frame timing. The PSBCH carries some basic system information, such as system bandwidth, timing information within radio frame, SS burst set periodicity, system frame number, etc. The SSBs may be organized into SS bursts to support beam sweeping. Further system information such as, remaining minimum system information (RMSI), system information blocks (SIBs), and other system information (OSI) can be transmitted on a physical sidelink shared channel (PSSCH) in certain subframes.

The allocation of frames, subframes, slots, etc. may be provisioned by network protocols and rules that apply to wireless communications in the licensed spectrum. For example, establishing time synchronization when operating in a licensed spectrum may include: (i) using global navigation satellite system (GNSS) as a common time reference (e.g., current coordinated universal time (UTC)), from which a UE derives frame and slot boundaries; and (ii) using an in-band signaling method, by which transmissions originating from both UEs and BSs are scheduled to avoid collision.

However, due to scarcity (e.g., over-crowding) in the licensed spectrum, certain aspects of wireless communication (e.g., CV2X communications) may not operate exclusively in the licensed spectrum. As such, it is possible that CV2X communications may operate in bands of the unlicensed spectrum. Thus, in some examples, GNSS-based synchronization between CV2X devices (e.g., UEs and/or BSs) may be applied in the unlicensed spectrum. In certain aspects, GNSS-based synchronization between CV2X devices may be achieved without signaling overhead (e.g., without synchronization signaling). However, if GNSS-based synchronization is not available or is undesirable due to, for example, reliability issues, synchronization between CV2X devices may be established via periodic, in-band broadcast signaling of synchronization signals (e.g., signaling of internal clock information between CV2X devices to support synchronization).

As discussed, dedicated spectrums for licensed wireless communication may be significantly crowded. In fact, there may be scenarios where the licensed spectrum will not be available to users due to overcrowding. Currently, CV2X (e.g., sidelink) communications over an unlicensed spectrum is a developing technology. As noted, procedures designed for licensed spectrum operation such as channel access and synchronization may not work in unlicensed spectrum conditions due to interference from other devices as well as regulatory restrictions. Thus, a procedure applicable to both LTE and NR for deploying CV2X operations in an unlicensed spectrum is desirable because it would reduce crowding of the licensed spectrum, thereby improving cellular network capacity.

### Example Techniques for Time-Division Multiple Access (TDMA) Based Communications in Unlicensed Bands

Aspects of the present disclosure provide for implementing TDMA-based techniques and frame formats to support CV2X communications in an unlicensed spectrum. In one example, CV2X devices are configured for periodic intervals of communication (e.g., the TDMA aspect), where time is partitioned into "CV2X windows" and "non-CV2X windows." In this example, CV2X devices may communicate during periodic CV2X windows in an unlicensed spectrum, while refraining from communication during non-CV2X windows to allow other wireless devices an opportunity to transmit and receive data. Within the CV2X windows, the CV2X devices may communicate using aspects of the same frame format used in a licensed spectrum. In one example, CV2X devices may partition the CV2X window into slots as illustrated in **FIG. 4****.**

In certain aspects, the duration of the CV2X and non-CV2X windows may depend on, for example, fairness, implementation, and/or performance considerations. For example, if a particular area has a relatively high amount of wireless communication traffic over the unlicensed spectrum, the CV2X windows may be reduced in time duration, and the non-CV2X windows may be increased in time duration. Such an implementation prevents overcrowding of the frequency band and interference with other non-CV2X devices. In another example, if a particular area has a relatively high number of CV2X devices, and/or a relatively high amount of wireless communication between the CV2X devices, CV2X windows may be increased in time duration, and the non-CV2X windows may be decreased in time duration if fairness allows.

Generally, non-CV2X devices are not designed for (or do not expect) such a TDMA operation. Thus, the CV2X devices may be configured (e.g., by CN 132 or a BS 110) or pre-configured to enforce TDMA time partitioning (e.g., CV2X windows and non-CV2X windows) on the non-CV2X devices. However, regulatory-enforced rules for unlicensed spectrum operation restrict accessing the band when it is sensed busy. Thus, in certain aspects, the enforcement of TDMA operations by the CV2X devices may include a listen-before-talk (LBT) procedure.

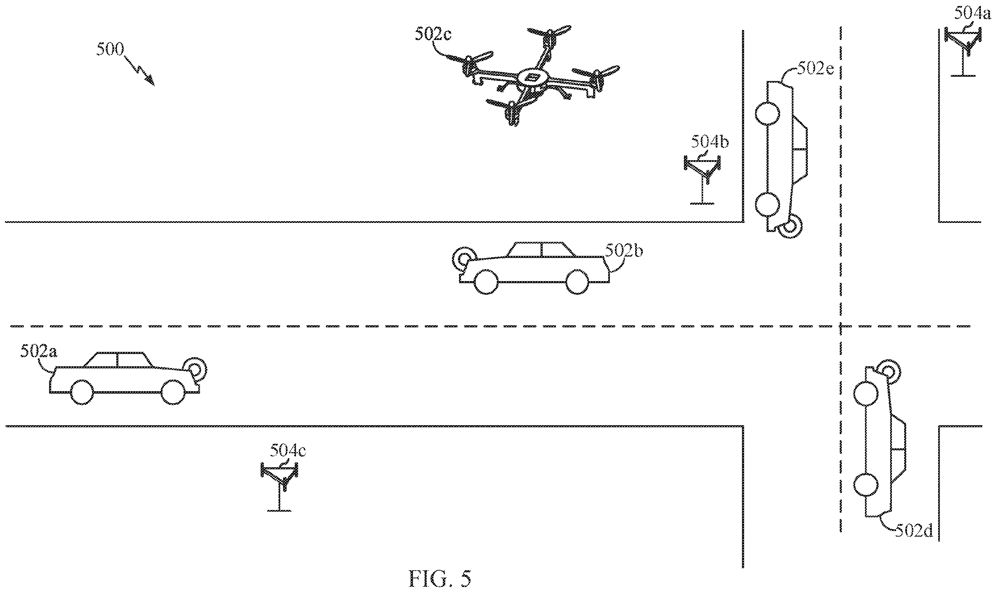

**FIG. 5** is a schematic diagram illustrating an example network 500 of multiple CV2X devices operating in an unlicensed spectrum. In the illustrated example, five CV2X devices (e.g., a first CV2X device 502a, a second CV2X device 502b, a third CV2X device 502c, a fourth CV2X device 502d, and a fifth CV2X device 502e) - collectively referred to as CV2X devices 502) may operate in an unlicensed spectrum with other non-CV2X devices (e.g., non-CV2X devices 504a-c - collectively referred to as non-CV2X devices 504). Although the example provided is illustrative of four automotive CV2X devices in a traffic setting, and a drone CV2X device, it can be appreciated that CV2X devices and environments may extend beyond these, and include other wireless communication devices and environments. For example, the CV2X devices 502 may include UEs (e.g., UE 120 of FIG. 1) and/or road-side units (RSUs) operated by a highway authority, and may be devices implemented on motorcycles or carried by users (e.g., pedestrian, bicyclist, etc.), or may be implemented on an aerial vehicle such as a drone. Here, as will be described in further detail below, a subset of CV2X devices may perform the LBT function for a given CV2X window.

In certain aspects, one feature of licensed CV2X communications is that all transmissions are aligned with a rigid and regular time grid (e.g., the timing/slot structure illustrated in **FIG. 4**). This timing structure naturally extends to wireless communication procedures such as resource allocation (scheduling), retransmissions, feedback signaling, etc., many of which are established by an operator/controller (e.g., BS 110 and CN 132 of **FIG. 1**) that has the rights to spectrum usage. While unlicensed bands have no such timing structure, a timing structure can be implemented by CV2X devices over non-CV2X devices (e.g., a WiFi device, etc.) in an unlicensed frequency band.

For example, if a plurality of CV2X devices are all time-synchronized, those devices can implement a common time-frequency communication structure in an unlicensed band. In one example, time synchronization can be established based on global navigation satellite system (GNSS) signals (i.e., all CV2X devices use the same GNSS time reference for mapping to facilitate a slot structure for communication). Alternatively, if GNSS is not available, time synchronization can be achieved via signaling between two or more of the CV2X devices. For example, a CV2X device may signal information from its internal clock(s) to another one or more CV2X devices. In some examples, the two or more CV2X devices may achieve time synchronization by following the same concepts and principles as a channel access procedure.

One of the challenges for establishing timing-synchronized communication in an unlicensed spectrum is overcoming timing inconsistencies between CV2X devices 502 induced by listen-before-talk (LBT) procedures, which can prevent alignment of communications with a time grid. For example, interference detected by a first CV2X device 502a may not be detected by a second CV2X device 502b, which can cause the first device 502a to begin transmitting before the LBT function of the second CV2X device 502b is completed.

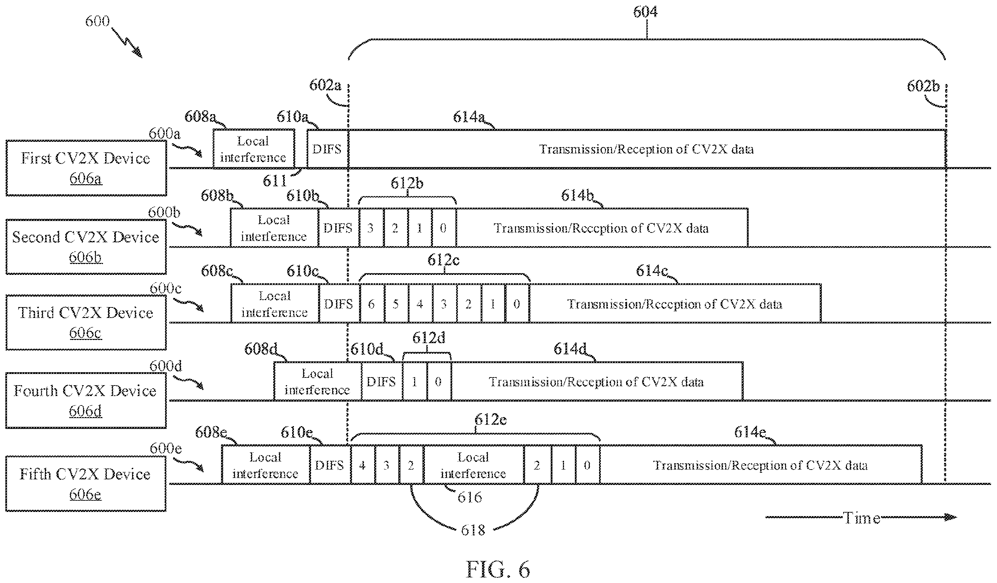

**FIG. 6** is a signal diagram illustrating example timelines 600 of signaling by each of a plurality of CV2X devices (e.g., a first CV2X device 606a, a second CV2X device 606b, a third CV2X device 606c, a fourth CV2X device 606d, and a fifth CV2X device 606e - collectively referred to as CV2X devices 606), wherein each of the plurality of CV2X devices 606 are attempting to begin communicating (e.g., transmit and/or receive) CV2X data at a start time 602a of a CV2X window 604. Specifically, **FIG. 6** illustrates a randomness of timing at which each of the CV2X devices 606 is able to transmit CV2X data, wherein the randomness is induced by interference local to each of the CV2X devices 606 and backoff period configurations of each of the CV2X devices 606. That is, each of the CV2X devices 606 may experience varying levels of local interference relative to the other CV2X devices 606 due to the different locations of each device relative to others. Moreover, each of the CV2X devices 606 may be configured to use a backoff period that is different than a backoff period of one or more of the other devices. Thus, each of the five CV2X devices 606 are illustrated to show example timelines of interference conditions and possible LBT function outcomes for their respective attempts to begin transmission at the start time 602a of the CV2X window 604.

Each of the CV2X devices 606 is configured (e.g., by CN 132 or a BS 110) or pre-configured to perform an LBT function prior to the start of the CV2X window 604. For example, each of the CV2X devices 606 may "listen" or receive the ambient energy transmitted over a frequency band prior to the start 602a of the CV2X window 604. If one or more of the CV2X devices 606 detect ambient energy (e.g., signaling transmitted by non-CV2X devices) over the frequency band, those CV2X devices 606 may continue to listen until they determine that the frequency band is idle. Once the CV2X devices 606 determine that the frequency band is idle, the CV2X devices 606 may continue to listen during a distributed coordination function (DCF) intra-frame space (DIFS) period of time 610 that may begin upon the determination that the frequency band is idle. By continuing to listen for the DIFS period 610 instead of immediately initiating transmission of CV2X data over the frequency band, in one example, the CV2X devices 606 take a less aggressive approach to reservation of the CV2X window 604 in the frequency band. The less aggressive approach may support compliance with fair use regulations of the unlicensed spectrum. If, during the DIFS period, a CV2X device 606 determines that the frequency band becomes busy (e.g., a non-CV2X device begins signaling during the DIFS period), then the CV2X device may defer its transmission. In some examples, the duration of the DIFS period 610 may be determined by the respective CV2X devices 606 according to IEEE 802.11 standards.

In timeline 600, each of the CV2X devices 606 initiates the LBT function at the same time prior to the start of the CV2X window 604. For example, the CV2X devices 606 may start the LBT function at any suitable time prior to the start of the CV2X window 604 (e.g., 9us to 200us), wherein the LBT function lasts any suitable duration of time (e.g., 25us). In certain aspects, the LBT function is performed during the (DIFS) period.

In timelines 600, each of the CV2X devices 606 implement a backoff period if the DIFS period 610 begins immediately after a frequency band initially sensed as busy goes idle (e.g., when local interference 608 on the frequency band is no longer detected or the power of the local interference 608 is below a threshold, for example, the time between the local interference 608a and CV2X data 614a is an idle time 611). For example, the frequency band may be idle during a backoff period or when no other devices (e.g., CV2X devices and/or non-CV2X devices) are transmitting (e.g., when there is no local interference detected). The backoff period may include a random number of time windows (e.g., slots), during which a CV2X device performs an LBT function during each of the time windows. That is, if a CV2X device detects that the frequency band is busy immediately before and/or during a DIFS period 610, the CV2X device may defer transmission of CV2X data until after the DIFS period 610 and after a backoff period that begins after the DIFS period 610.

Each of the CV2X devices 606 illustrated in **FIG. 6** share a common start time 602a and a common end time 602b of a CV2X window 604, during which the CV2X devices 606 are configured to communicate over an unlicensed frequency band. In a first timeline 600a, a first CV2X device 606a performs an LBT function during a DIFS period 610a that occurs sometime after local interference 608a (e.g., signaling from non-CV2X devices) on the frequency band. Thus, because the local interference 608a does not occur immediately prior to, or during the DIFS period, no backoff period is instituted by the first CV2X device 606a prior to transmission of CV2X data 614a. That is, the first CV2X device 606a is able to immediately begin transmitting CV2X data 614a at the start of the CV2X window 604.

In a second timeline 600b, a second CV2X device 606b detects local interference 608b on the frequency band, and performs an LBT function during a DIFS period 610b that begins once the frequency band goes idle (e.g., local interference 608b ends). Here, because the DIFS period 610b begins immediately after the frequency band goes idle, the second CV2X device 606b implements a backoff period 612b prior to transmission of CV2X data 614b. In this example, the backoff period 612b is comprised of four time periods. Because no interference is detected throughout the duration of the backoff period 612b, the second CV2X device 606b is able to begin transmitting the CV2X data 614b at the end of the backoff period 612b.

In a third timeline 600c, a third CV2X device 606c detects local interference 608c on the frequency band, and performs an LBT function during a DIFS period 610c that begins once the third CV2X device 606c determines that the local interference 608c has ended. Because the DIFS period 610c occurs immediately after the frequency band goes idle, a backoff period 612c is instituted by the third CV2X device 606c prior to transmission of CV2X data 614c. In this example, the backoff period 612c is comprised of seven time periods, further delaying transmission of CV2X data relative to the delay experienced by the second CV2X device 606b. Because no interference is detected throughout the backoff period 612c, the third CV2X device 606c is able to begin transmitting the CV2X data 614c at the end of the backoff period 612c.

In a fourth timeline 600d, a fourth CV2X device 606d may detect local interference 608d on the frequency band that extends into the CV2X window 604. Here, because the DIFS period 610d occurs immediately after the frequency band goes idle, the fourth CV2X device 606d institutes a backoff period 612d prior to transmission of CV2X data 614d. In this example, the backoff period 612d includes two time periods. Because no interference is detected during the backoff period 612d, the fourth CV2X device 606d is able to begin transmitting the CV2X data 614d at the end of the backoff period 612d.

In a fifth timeline 600e, fifth CV2X device 606e detects local interference 608e on the frequency band, and performs an LBT function during a DIFS period 610e that begins immediately after the frequency band goes idle (e.g., the local interference 608e ends). Thus, the fifth CV2X device 606e implements a backoff period 612e (having five time periods). As illustrated, the fifth CV2X device 606e detects intermittent interference during the backoff period 612e, further delaying transmission of CV2X data 614e. In some examples, a CV2X device 606e may restart any time period within the backoff period 612 if local interference is detected during that time period. In this example, the fifth CV2X device 614e detects additional local interference 616 during a second time period 618 of the backoff period 612e. Accordingly, then the additional local interference 616 ends, the fifth CV2X device 614e may restart the backoff period at the second time period instead of restarting the entire backoff period.

Note that the first CV2X device 606a is the only example where a CV2X data transmission starts at the intended time (e.g., at the start 602a of the CV2X window 604). Accordingly, as described below, CV2X devices 606 may perform additional communications to improve their ability to reserve and effectively communicate over a CV2X window 604.

### Example Techniques for Reserving a CV2X Window using Clear-to-Speak (CTS) Signaling

Certain aspects relate to a CV2X and non-CV2X TDMA pattern that is implicitly enforced over an unlicensed band. Here, the TDMA pattern is known by CV2X devices 606, but may not be known by non-CV2X devices, so the CV2X devices 606 may enforce access by both CV2X devices 606 and non-CV2X devices to an unlicensed frequency band during separate periods of time (e.g., CV2X windows 604 and non-CV2X windows) allowing a first window of time for non-CV2X devices to communicate, and a second window of time allowing CV2X devices 606 to communicate. In some examples, the CV2X devices 606 are (pre-) configured with the TDMA pattern (e.g., timing and duration). Alternatively, the CV2X devices 606 may receive TDMA pattern configuration via signaling by a licensed band network (e.g., BS 110 or CN 132 of FIG. 1) or by signaling in an unlicensed band network (e.g., signaling between CV2X devices 606). Enforcement of such a TDMA pattern in an unlicensed band allows CV2X devices 606 to operate using the same slot timing structure used in licensed operation (e.g., no change in procedures such as resource allocation, retransmissions, etc.).

Because the non-CV2X devices are unaware of any TDMA pattern, the CV2X devices 606 may attempt to make the non-CV2X devices aware of it through implicit means. In one example, prior to the beginning of each CV2X window 604, the CV2X devices 606 may dedicate a brief period of time to performing an LBT function, reserving the CV2X window 604, and signaling between the CV2X devices 606 to align communication timing of the CV2X devices 606.

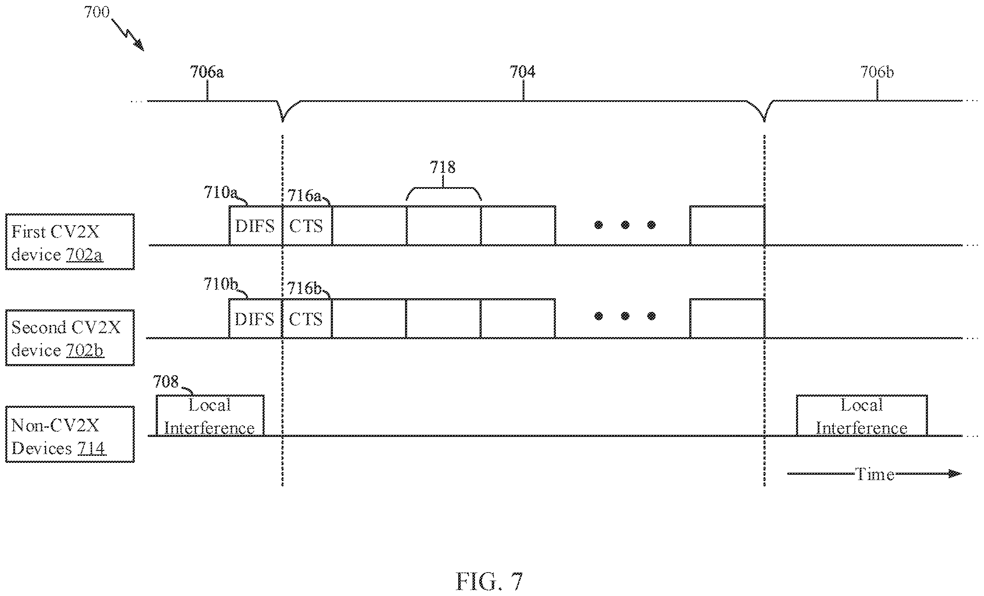

**FIG. 7** is a signal diagram illustrating an example timeline 700 of communication over a CV2X window 704 reserved by a first CV2X device 702a and a second CV2X device 702b (collectively referred to as CV2X devices 702). The first CV2X device 702a and the second CV2X device 702b may correspond to the CV2X devices illustrated in **FIGs. 5** and **6**). As illustrated, the CV2X window 704 falls between a first non-CV2X duration of time 706a and a second non-CV2X duration of time 706b. Non-CV2X devices 714 (e.g., non CV2X devices 504 of **FIG. 5**) generate non-CV2X signaling (e.g., local interference 708) during the first non-CV2X duration of time 706a and a second non-CV2X duration of time 706b, but not during the CV2X window 704 because the CV2X devices 702 are communicating during that window of time. During the CV2X window 704, the CV2X devices 702 may utilize transmission time intervals (TTIs) 718 to transmit and receive data. The TTIs 718 may have a duration that is equal to a frame, a subframe, a slot, or any suitable number of symbols.

In the example timeline 700, the CV2X devices 702 attempt to reserve the CV2X window 704 so that they can communicate over an unlicensed frequency band. Initially, the first CV2X device 702a performs an LBT function during a first DIFS period 710a, and the second CV2X device 702b performs an LBT function during a second period DIFS 710b, at a time prior to the beginning of the CV2X window 702. Because there is relatively little interference caused by non-CV2X devices 714, the CV2X devices 702 will find the frequency band idle immediately prior to the start of the CV2X window 704. Thus, each of the CV2X devices 702 proceed to transmit a clear-to-speak (CTS) signal 716 at the start of the CV2X window 704. In this example, the first CV2X device 702a transmits a first CTS signal 716a at the same time that a second CV2X device 702b transmits a second CTS signal 716b. The CTS signals 716 may also be identical signals, or at least have the same contents (e.g., an indication of a channel occupancy time (COT) which is equal to the duration of the CV2X window 704 minus a portion, or the full duration, of the CTS signal 716). That is, because the CTS signal(s) 716 occupy time within the CV2X window 704, and one or more other CV2X devices 702 may have to process the CTS signal(s) 716, the COT is equal to the remaining portion of the time interval (e.g., the CV2X window 704) over which the CV2X devices 702 may communicate CV2X data.

This CTS signal 716 may be understood by the non-CV2X devices 714, and may prevent them from accessing the frequency band during the CV2X window 704. Thus, each of the CV2X devices 702 may attempt to reserve the CV2X window 704 whether or not one or more of the CV2X devices 702 have any intention to communicate during the CV2X window 704. With all devices transmitting the CTS signal 716, a greater number of non-CV2X devices may be informed about the reservation, hence improving the CV2X window 702 protection from interference.

It should be noted, however, that other scenarios may have frequency bands that are more congested with local interference, and may delay the start of a CV2X window. For example, interference from non-CV2X devices may delay transmission of a CTS signal to a time that occurs after the beginning of the CV2X window. It may even happen that a CV2X device is not able to finish the LBT function within the CV2X window due to heavy local interference. In such cases, waiting for every CV2X device to finish its LBT function prior to beginning CV2X communications may be inefficient (e.g., CV2X devices may not be able to communicate for long periods of time).

However, in some cases, not all CV2X devices will experience the same heavy congestion of a frequency band. Thus, certain approaches may include initiating access to the frequency band via CV2X device(s) that experience relatively less interference than other CV2X devices on the same frequency band.

### Example Techniques for Reserving a CV2X Window Using CTS Signaling by a First-in-Time CV2X device

In some examples, CV2X devices may be configured to not only measure ambient energy on a frequency band during an LBT function, but to also attempt to decode CTS signals transmitted by other CV2X devices within that energy. For example, a first CV2X device may receive and decode a CTS signal while performing the LBT function. The CTS signal may be transmitted by a second CV2X device that sensed the frequency band as idle. The CTS signal is configured to reserve a COT corresponding to the remaining CV2X window period. Reception of the CTS signal transmitted by the second CV2X device may trigger the first CV2X device to terminate the LBT function, and treat the frequency band as available for CV2X communications until the end of the CV2X window. In some examples, the first CV2X device determines that the received CTS signal was transmitted by the second CV2X device because the COT duration indicated in the CTS signal matches with the end of the CV2X window that the first CV2X device is pre-configured (e.g., by CN 132 or a BS 110) or pre-configured with.

In this example, after the first CV2X device receives and decodes the CTS transmitted by the second CV2X device, the first CV2X device will abort the LBT function, but will not transmit an additional CTS signal, as this may interfere with other CV2X communications during the CV2X window. Effectively, the first-in-time CV2X device that finishes the LBT function (in this example, the first CV2X device) and determines that the frequency band is idle reserves the frequency band for all other CV2X devices within range.

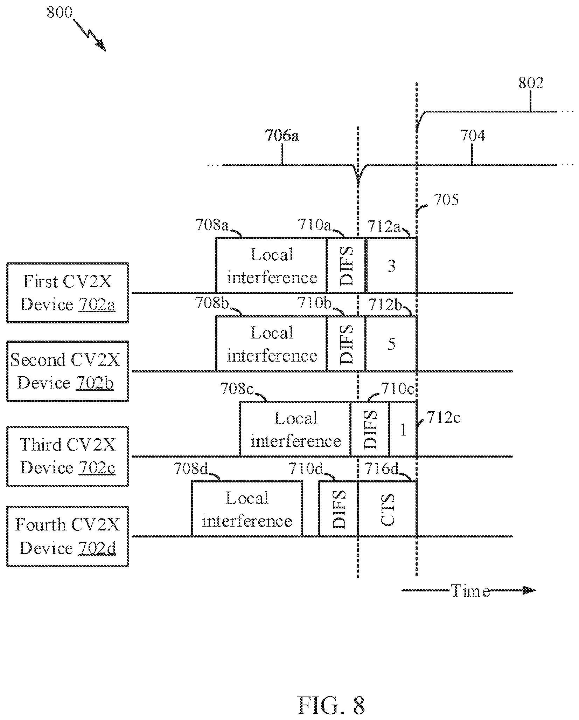

**FIG. 8** is a signal diagram illustrating an example timeline 800 of CV2X window 704 reservation by the CV2X devices (e.g., CV2X devices 702 of **FIG. 7**). In this example, a plurality of CV2X devices (e.g., a first CV2X device 702a, a second CV2X device 702b, a third CV2X device 702c, and a fourth CV2X device 702d) are operating on a frequency band. The CV2X devices 702 may attempt to reserve a CV2X window 704 on an unlicensed frequency band by collectively performing an initial LBT process.

As illustrated in the example timeline 800, the first CV2X device 702a detects a first instance of local interference 708a on the frequency band, and performs a first DIFS period 710a once the local interference ends (e.g., the frequency band becomes idle). Because the first DIFS period 710a begins immediately after the local interference ends, the first CV2X device 702a initiates a first backoff process 712a after the first DIFS period 710a. Similarly, the second CV2X device 702b detects a second instance of local interference 708b on the frequency band, and performs a second DIFS period 710b once the local interference ends. Because the second DIFS period 710b begins immediately after the local interference ends, the second CV2X device 702b initiates a second backoff process 712b after the second DIFS period 710b. As with the first and second CV2X devices, the third CV2X device 702c detects a third instance of local interference 708c on the frequency band, and performs a third DIFS period 710c once the local interference ends. Because the third DIFS period 710c begins immediately after the local interference ends, the third CV2X device 702c initiates a third backoff process 712c after the third DIFS period 710c.

In the example timeline 800, the fourth CV2X device 702d may detect a fourth instance of local interference 708d on the frequency band, but the fourth instance of local interference 708d ends before the fourth CV2X device 702d performs a fourth DIFS period 710d. Accordingly, the fourth CV2X device 702d does not perform a backoff process after the fourth DIFS period 710d. Instead, because the fourth CV2X device 702d does not detect any interference over the frequency band during the DIFS period 710d, the fourth CV2X device 702d transmits a CTS signal 716d in order to reserve the CV2X window 704 in a TDMA-like manner. In this example, each of the first CV2X device 702a, the second CV2X device 702b, and the third CV2X device 702c receive and decode the CTS signal 716d during their respective DIFS periods and/or backoff periods, and terminate their respective backoff periods. As such, all CV2X devices 702 stop their respective LBT functions after a CTS signal reserving the CV2X window has been detected. Thereafter, all four of the CV2X devices 702 may begin CV2X communications for the remaining COT 802 (beginning at the after the CTS signal 716d is completed 705, or during transmission of the CTS signal 716d) of the CV2X window 704.

Accordingly, transmission of the CTS signal 716d may be used to overcome the aforementioned challenges for establishing timing-synchronized communication in an unlicensed spectrum. In this example, because the CV2X devices 702 listen for a CTS signal during their respective DIFS periods 710, any one or more of the CV2X devices 702 can notify others of the start of the remaining COT 802, thereby aligning timing of communications between the CV2X devices 702. As such, timing inconsistencies between CV2X devices 702 induced by listen-before-talk (LBT) procedures can be reduced or eliminated, and communications between the CV2X devices 702 can be aligned to a time grid, via transmission of the CTS signal 716d.

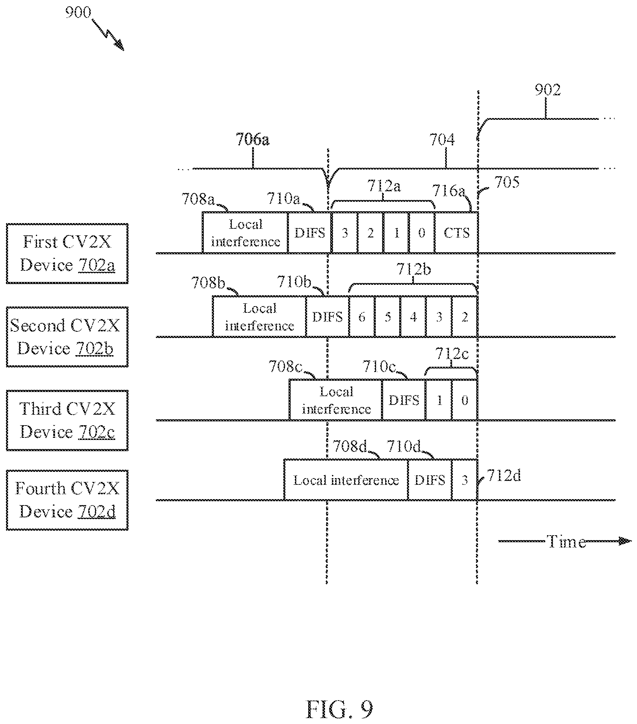

**FIG. 9** is a signal diagram illustrating an example timeline 900 of CV2X window 704 reservation by CV2X devices 702. In the example timeline 900, each of the CV2X devices 702 detect local interference prior to the CV2X window 704. Accordingly, each of the CV2X devices initiates a backoff period. For example, the second CV2X device 702b detects a second instance of local interference 708b on the frequency band. Upon detecting that the frequency band is idle (e.g., determining that the frequency band no longer has any local interference), the second CV2X device 702b waits a second DIFS period 710b. Because the second DIFS period 710b began immediately after the second instance of local interference 708b, the second CV2X device 702b waits for a second backoff period 712b while continuing to listen to the frequency band for local interference and a CTS signal. Similarly, the third CV2X device 702c detects a third instance of local interference 708c on the frequency band. Upon detecting that the frequency band is idle, the third CV2X device 702c waits a third DIFS period 710c followed by a third backoff period 712c while continuing to listen to the frequency band for local interference and a CTS signal. The fourth CV2X device 702d detects a fourth instance of local interference 708d on the frequency band. Upon detecting that the frequency band is idle, the fourth CV2X device 702d waits a fourth DIFS period 710d followed by a fourth backoff period 712d while continuing to listen to the frequency band for local interference and a CTS signal.

The first CV2X device 702a also performs an LBT function and detects a first instance of local interference 708a on the frequency band. Once the first CV2X device 702a no longer detects the local interference 708a, the first CV2X device 702a performs a first DIFS period 710a. Because the first DIFS period 710a begins immediately after the first instance of local interference 708a, a first backoff period 712a is performed by the first CV2X device 702a. Upon completion of the first backoff period 712a, the first CV2X device 702a determines that the frequency band is still idle (e.g., detects no local interference during the first backoff period 712a), and thus, the first CV2X device 702a transmits a CTS signal 716a. Here, the CTS signal 716a prompts the remaining CV2X devices to terminate their respective backoff periods and begin communicating over the frequency band for the remaining COT 902 (beginning after the CTS signal 716a is completed 705, or during transmission of the CTS signal 716a) of the CV2X window 704. Thus, the CV2X devices 702 are configured to stop their respective LBT processes after a CTS reserving the CV2X window 704 has been transmitted.

Note that in the examples of **FIGs. 8** and **9****,** the CV2X devices 702 may not all share the same backoff period, as each device may randomly select its own duration of backoff period. Such an approach may result in the CV2X devices 702 taking a more aggressive approach to reservation of time intervals in the frequency band. For example, with varied backoff period durations, there is a greater likelihood that one or more of the CV2X devices 702 will have a relatively short duration of a backoff period, thereby providing the CV2X devices 702 with more opportunities for transmitting a CTS signal. Such an approach may improve communication between the CV2X devices 702 by providing more opportunities for the CV2X devices 702 to reserve CV2X windows in environments with relatively high levels of local interference.

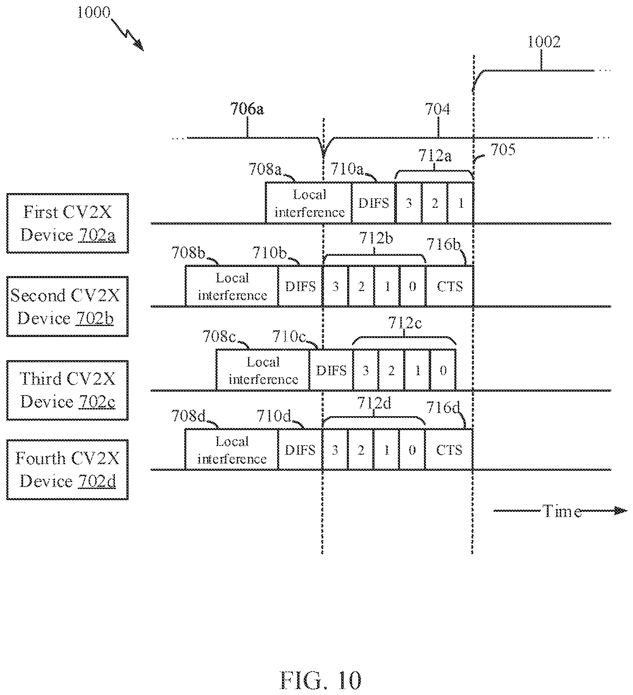

**FIG. 10** is a signal diagram illustrating an example timeline 1000 of CV2X window 704 reservation by CV2X devices 702. In the example timeline 1000, each of the CV2X devices 702 are configured with the same backoff period 712 duration (e.g., each of the CV2X devices 702 is configured for four backoff intervals).

Each of the CV2X devices 702 may separately generate their own backoff period 712 duration using a common random generator algorithm, but use a GPS signal as a common seed. As such, the random generator at each of the CV2X devices 702 may produce the same backoff period duration for each of the CV2X devices 702 because the generator of each device uses a common signal (e.g., a GPS clock time in a GPS signal) to generate the duration. Using such an approach may result in a less aggressive reservation of time intervals in the frequency band, which may improve compliance with regulations on fair use of the unlicensed spectrum. Note that in this example, the CV2X devices 702 that initiate their backoff procedure later than the other devices will still be able to terminate their backoff procedure upon detection of a CTS transmitted by another device. For example, as illustrated, the second CV2X device 702b and the fourth CV2X device 702d complete their LBT functions (e.g., pre-DIFS, DIFS 710, and/or backoff period 712) at the same time. Thus, both the second CV2X device 702b and the fourth CV2X device 702d transmit a CTS signal (716b and 716d - collectively, 716). Accordingly, the first CV2X device 702a and the third CV2X device 702c terminate their LBT functions upon receiving the CTS signals 716. Here, transmission of the CTS signals 716 prompt the remaining CV2X devices to terminate their respective backoff periods and begin communicating over the frequency band for the remaining COT 1002 (beginning after one or more of the CTS signals 716 are completed 705, or during transmission of one or more of the CTS signals 716) of the CV2X window 704.

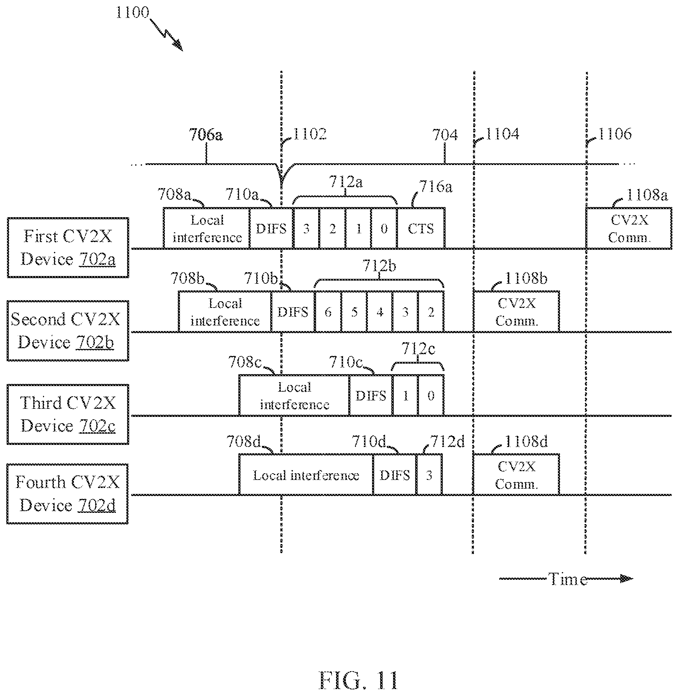

**FIG. 11** is a signal diagram illustrating an example timeline 1100 of CV2X window reservation by CV2X devices 702. In this example timeline 1100, the CV2X devices 702 may transmit CV2X data within the CV2X window 704 according to a predefined slot pattern (e.g., using the slot structure illustrated in **FIG. 4**).

Each of the CV2X devices 702 performs an initial LBT procedure. As levels of local interference 708 detected by each CV2X device 702 may vary, the LBT procedure of one device begins at a different time relative to other devices. Here, the CV2X window 704 begins at a first time 1102. However, because the CV2X devices 702 are either detecting local interference 708 or are performing the LBT procedure, none of the devices can transmit CV2X data at the beginning of the CV2X window 704. Thus, the devices listen to the frequency band to detect a CTS signal.

However, if the CV2X devices 702 do not have a coordinated timing for CV2X communications, then a CV2X data transmission could be initiated at any time (given a CTS signal has been detected) within the CV2X window 704. This may lead to complications of procedures like resource reservation, and may require that each of the CV2X devices 702 perform blind decoding of all signals received during the CV2X window 704. Thus, in some aspects, the CV2X devices 702 are configured to communicate CV2X data within the CV2X window 704 according to a predefined slot pattern (e.g., the pattern illustrated in **FIGs. 4** and **7**). For example, the CV2X window 704 may be sized such that it has a duration of a finite number of slots. Note that although the example of a "slot" is used, any suitable TTI duration may also be used.

As illustrated in **FIG. 11****,** the first CV2X device 702a is the first device to complete the LBT function and transmit a CTS signal 716a. However, because the CV2X devices 702 are restricted to communicating CV2X data over a predefined slot pattern, and because the CTS signal 716a does not fall into a full slot or does not end with a full slot, the CV2X devices 702 may wait until the next full slot after the CTS signal 716a to begin communicating. Here, the next full slot begins at a second time 1104. Thus, at the start of the second time 1104, the CV2X devices 702 can expect CV2X data communications to take place. Here, the second CV2X device 702b transmits CV2X data 1108b and the fourth CV2X device receives CV2X data 1108d during the first full slot. At a third time 1106, the first CV2X device 702a transmits CV2X data 1108a over the frequency band at a second full slot of the predefined slot pattern that begins at the third time 1106.

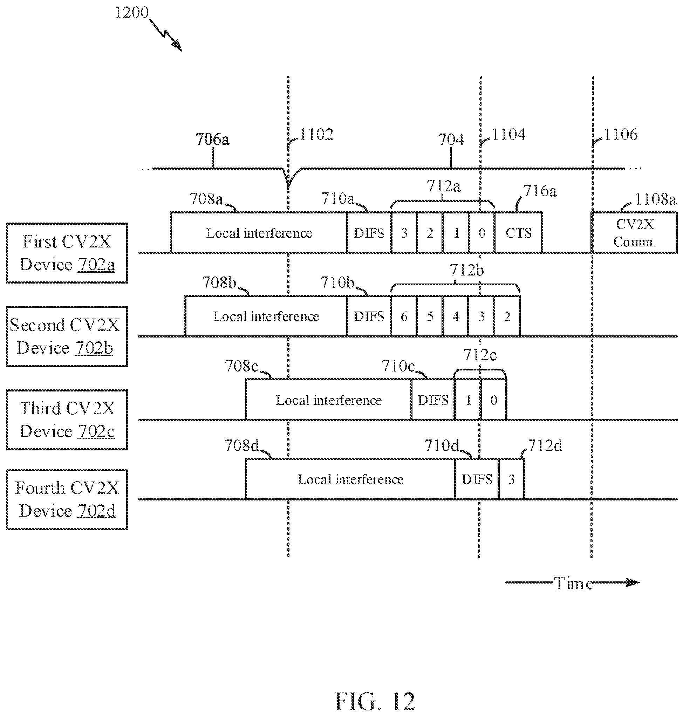

**FIG. 12** is a signal diagram illustrating an example timeline 1200 of CV2X window reservation by the CV2X devices 702. Similar to **FIG. 11****,** transmissions within the CV2X window 704 may occur according to a predefined slot pattern. Here, the first CV2X device 702a transmits the first CTS signal 716a during a first slot (e.g., a duration of time beginning at a second time 1104 and ending at a third time 1106) of a predefined slot pattern in the CV2X window 704. Because the CTS signal 716a takes up only a portion of the first slot, CV2X communications may not begin until the start of a second slot in the CV2X window (assuming that the CV2X window 704 is long enough to contain more than one CV2X slots). Thus, the CV2X devices 702 may begin CV2X communications upon the start of the second slot (e.g., after the third time 1106 which ends the first slot and begins the second slot). Here, the First CV2X device 702a performs a CV2X communication 1108a during the second slot.

It should be noted that in some scenarios, a first CV2X device 702a may not detect/receive a CTS signal transmitted by one or more other CV2X devices, even if the first CV2X device 702a is performing an LBT function and is listening for the CTS signal. In some cases, the first CV2X device 702a may be out of range of the one or more other CV2X devices, and/or local interference may be strong enough to prevent decoding of the CTS signal. Moreover, reserving a CV2X window using a CTS signal transmitted from only one of the other CV2X devices may cause less than all of the surrounding non-CV2X devices to defer communications during the CV2X window. For example, only the non-CV2X devices local to the CV2X device that transmits the CTS signal may decode the CTS signal and defer communications during the CV2X window, whereas other non-CV2X devices in the field that did not receive the CTS signal may continue to transmit or attempt to transmit within the CV2X window. Solutions to these issues are described in the following examples.

As noted in previous examples, a CV2X device may terminate an LBT function if it detects a CTS signal transmitted by another CV2X device. However, in certain aspects, termination of the LBT function may be triggered not only by the detection of a CTS signal, but also by the detection of a control channel (e.g., physical sidelink control channel (PSCCH)) transmission.

Accordingly, as illustrated in **FIGs. 11** and **12****,** communications between CV2X devices 702 may be improved by reducing or eliminating reliance, by CV2X devices, on hardware resources for blind decoding, by communicating only during a predefined slot pattern. Such an approach also improves timing of communications because all CV2X devices 702 use a common approach to timing.

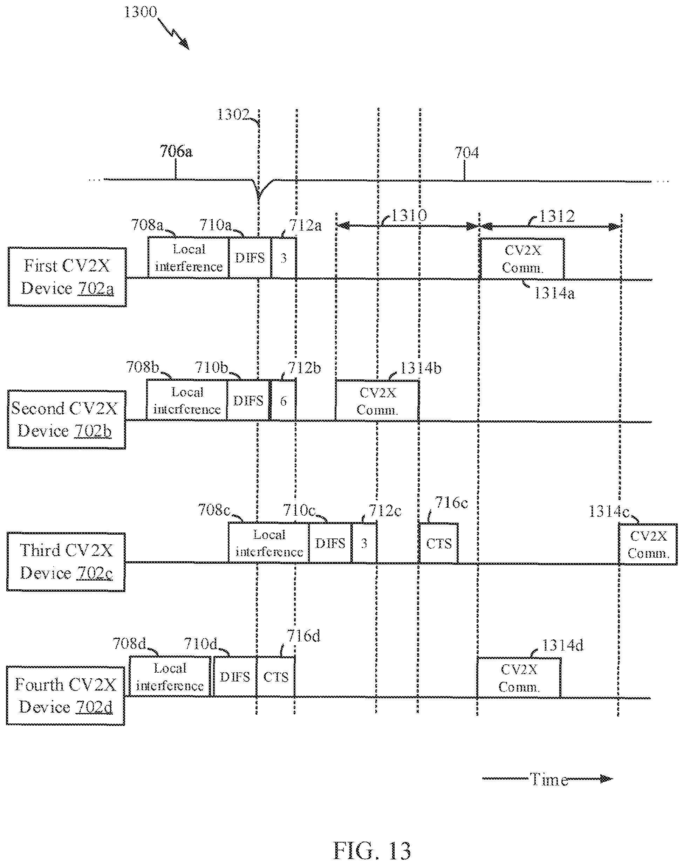

**FIG. 13** is a signal diagram illustrating an example timeline 1300 of CV2X window reservation by CV2X devices 702. Here, the CV2X devices 702 are configured to detect both CTS signals and physical control channel signals (e.g., PSCCH signals) over the frequency band from other CV2X devices 702 while performing an LBT function. Here, local interference 708 is detected by each of the CV2X devices 702 in a non-CV2X window 706a. Accordingly, when the local interference 708 ceases or the frequency band is determined to be idle, each of the CV2X devices 702 will wait during a respective DIFS period 710 before communicating CV2X data 1314.

In the example timeline 1300, the fourth CV2X device 702d does not detect a fourth instance of local interference 708d immediately prior to a fourth DIFS 710d. As such, the fourth CV2X device 702d does not implement a backoff period after the fourth DIFS 710d. Instead, because the fourth CV2X device 702d does not detect local interference during the fourth DIFS 710d, the fourth CV2X device 702d will transmit a fourth CTS signal 716d at the start 1302 of the CV2X window 704. While performing the LBT function, the first CV2X device 702a and the second CV2X device 702b sense the fourth CTS signal 716d, and both devices cease their respective backoff periods (712a and 712b) and wait until the first slot 1310 in the CV2X window 704 to begin CV2X communications. Here, the second CV2X device initiates a CV2X communication 1314b.

However, the third CV2X device 702c does not sense the fourth CTS signal 716d transmitted by the fourth CV2X device 702d. It may be that the third instance of local interference 708c sensed by the third CV2X device 702c overpowered the fourth CTS signal 716d. Thus, the third CV2X device 702c performs a third DIFS 710c followed by a third backoff period 712c. However, during the third backoff period 712c, the third CV2X device 702c detects a control channel signal transmitted by the second CV2X device 702b during its CV2X communication 1314b. Upon detection of the control channel, the third CV2X device 702c terminates the third backoff period 712c of the LBT function and waits until at least a subsequent second slot 1312 to begin CV2X communication.

In some aspects, the third CV2X device 702c may transmit a third CTS signal 716c to ensure that any non-CV2X devices and CV2X devices that are local to the third CV2X device 702c are made aware of the reservation of the remaining portion of the CV2X window 704. For example, because the third CV2X device 702c did not sense a CTS signal previously transmitted by the fourth CV2X device 702d, any non-CV2X devices and/or CV2X devices local to the third CV2X device 702c may have also missed the previously transmitted CTS. In some examples, after sensing the control channel signaling, the third CV2X device 702c may transmit the third CTS signal 716c over the last OFDM symbol (e.g., gap symbol) of the CV2X slot that the control channel was sensed in (in this case, the first slot 1310).

Accordingly, if one or more of the CV2X devices 702 do not receive a CTS signal, then termination of the LBT procedure at the one or more CV2X devices 702 may also be triggered by detection of a CV2X PSCCH. In this example, even though the one or more CV2X devices 702 did not detect the CTS signal, the one or more CV2X devices 702 can still be made aware of a CV2X window reservation by receiving PSCCH signals, thereby improving coordinated communication between CV2X devices 702 in environments with high interference.

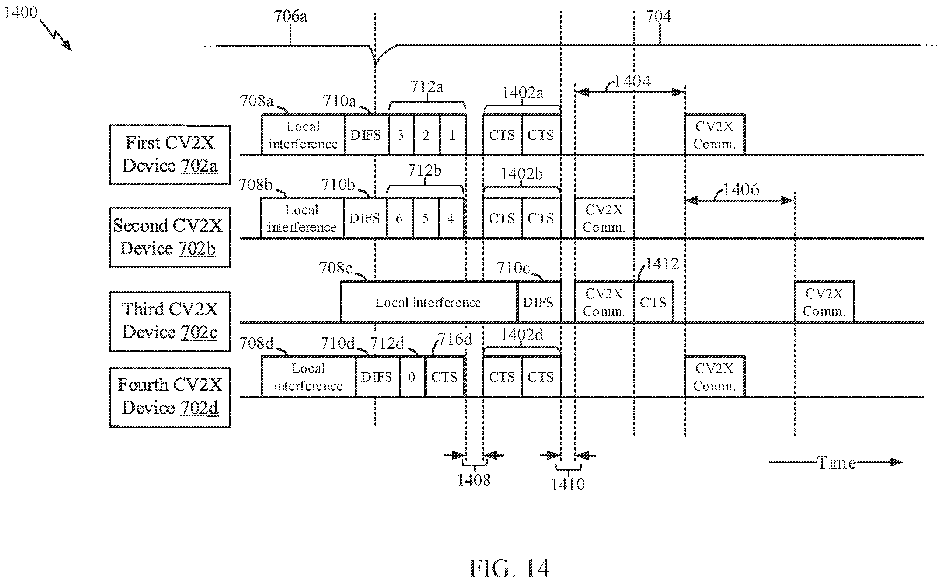

**FIG. 14** is a signal diagram illustrating an example timeline 1400 of CV2X window reservation by CV2X devices 702. In some aspects, the CV2X devices 702 may be configured to transmit additional CTS signals within the CV2X window until the start of a next CV2X slot.

In the example timeline 1400, the fourth CV2X device 702d determines the frequency band is idle and transmits a first in time CTS signal 716d prior to a first CV2X slot 1404. The first CV2X device 702a and the second CV2X device 702b both detect and receive the CTS signal 716d, and terminate their respective LBT functions (712a and 712b). During a next CTS slot 1408, all three of the devices transmit one or more CTS signals until the beginning of the first CV2X slot 1404. The CV2X devices 702 may also be configured to transmit the additional CTS signals (1402a, 1402b, and 1402d) aligned over a timing grid configured (e.g., by CN 132 or a BS 110) or pre-configured at each of the CV2X devices. This provides a benefit of having time aligned CTS signals that are transmitted by different devices to form a single-frequency network (SFN)-type transmission. It should be noted that only the CTS transmissions that occur after the first CTS signal 716d may be transmitted such that their transmission is aligned with CTS slots of the timing grid, whereas the first CTS transmission may be transmitted at any instant in time. The SFN-type transmission may improve the power of the CTS signals to improve their effective range. In this example, the timing grid provides for a switching gap 1410 immediately prior to the start of the next CV2X slot 1406 to provide the CV2X devices 702 with enough time to switch into a reception mode if necessary (e.g., the CV2X devices that transmit the CTS signals are already in a transmit mode).

In the example timeline 1400, local interference caused by non-CV2X devices prevent the third CV2X device 702c from receiving and/or decoding the CTS signals transmitted by the other devices until the last CTS signals (the last in time CTS signals transmitted by the first CV2x device 702a, the second CV2X device 702b, and the fourth CV2X device 702d) are transmitted immediately prior to the first CV2X slot 1404. Because there are no remaining CTS slots in the timing grid prior to the first CV2X slot 1404, the third CV2X device 702c may send a CTS signal 1412 during the last symbol and/or gap period of the first CV2X slot 1404. As such, the CTS signal 1412 transmitted by the third CV2X device 702c may improve the range of CV2X and non-CV2X devices that will receive CTS signaling during the CV2X window 704. It will also trigger early termination of LBT for other CV2X devices that missed the CTS signals transmitted prior to the first CV2X slot 1404.

Accordingly, if one or more of the CV2X devices 702 are notified of a CV2X window reservation by receiving a PSCCH signal, those one or more CV2X devices 702 can ensure that additional CV2X devices 702 are made aware of the CV2x window 704 by transmitting CTS signals (e.g., CTS signal 716c). This improves coordinated communication between CV2X devices 702 in environments with high interference because the additional CTS signals may notify other CV2X devices that did not receive an initial CTS signal or PSCCH signal.

### Example Techniques for Device Access in an Unlicensed Band using Time-Division Multiple Access (TDMA)

In certain aspects, each CV2X device of a plurality of CV2X devices may be configured to operate as part of a global system utilizing a common CV2X TDMA window communication scheme. For example, each of the plurality of CV2X devices may utilize known durations and periodicity of CV2X windows to communicate with other of the plurality of CV2X devices. Here, the plurality of CV2X devices may be configured (e.g., by a network, according to the network standard) to communicate using CV2X windows having a common duration and a common periodicity known by each of the plurality of CV2X devices.

In certain aspects, a plurality of CV2X devices may be configured to determine an ad-hoc CV2X TDMA window communication scheme for a local group of CV2X devices. In this example, a set of CV2X devices located near each other may form a group that has its own TDMA window communication scheme. For example, the ad-hoc CV2X TDMA window communication scheme may be different from the network standard, and may be based on local communication parameters including how busy the local frequency band is, how many CV2X devices are in the local group of CV2X devices, how often CV2X devices in the group need to communicate, and any other suitable local communication parameters. Accordingly, a local group of CV2X devices may be able to flexibly determine a CV2X TDMA window communication scheme that can be optimized to the group communication needs.

In certain aspects, a CV2X device may be configured to operate using the common CV2X TDMA window communication scheme as a system-wide baseline configuration. As discussed, the common CV2X TDMA window communication scheme may be configured by the network and may provide a common window duration and a common periodicity corresponding to a maximum envisioned or network allowed channel utilization by the plurality of CV2X devices. That is, the common CV2X TDMA window communication scheme may be configured to provide the plurality of CV2X devices with maximum use of a frequency band based on large-scale co-existence considerations with other RATs considerations. However, one or more CV2X devices in a group of CV2X devices local to each other may determine to adjust the common CV2X TDMA window communication scheme to meet the needs and communication requirements of the local group of CV2X devices. For example, one or more CV2X devices in the local group of devices may determine that the frequency band utilization corresponding to the common CV2X TDMA window communication scheme is unnecessary or even overly aggressive towards other RATs in the area, and may instead determine to use a smaller TDMA window duration and/or skip certain TDMA windows.

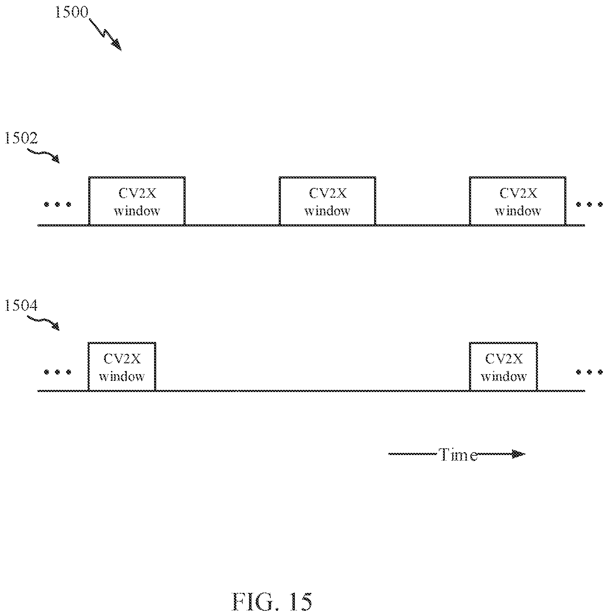

**FIG. 15** is a signal diagram illustrating example timelines 1500 of time-division multiple access (TDMA) window configuration, in accordance with certain aspects of the present disclosure. As shown, a baseline configuration 1502 (e.g., the common CV2X TDMA window communication scheme) may provide for a relatively aggressive periodicity of TDMA windows, with each TDMA window having a relatively long duration. However, a local group of CV2X devices may not require such frequent and/or long durations of TDMA windows. Accordingly, a local group configuration 1504 may reduce the CV2X duration and/or periodicity to accommodate the communication requirements of the local group.

In certain aspects, a group of CV2X devices may be formed by local devices, and a group CV2X TDMA window communication scheme may be generated for communication within the group of devices. In some examples, each CV2X device in the group may attempt to secure a TDMA window of the frequency channel at the beginning of each TDMA window start (according to the group configuration) by sending a CTS indicating the duration of the window. In some examples, any CTS transmitted within the group may be configured to differentiate the group CTS from another CTS transmitted by other CV2X devices from the same or other groups. If a CTS with the group TDMA window duration is detected, a CV2X device within the group may proceed as described above with reference to any one or more of **FIGs. 7-14****.** If a CTS from another group (e.g., a CTS with a different TDMA window duration) is detected, a CV2X device that is not part of the other group may ignore the CTS signal and wait until a CTS signal from the CV2X device's group is detected.

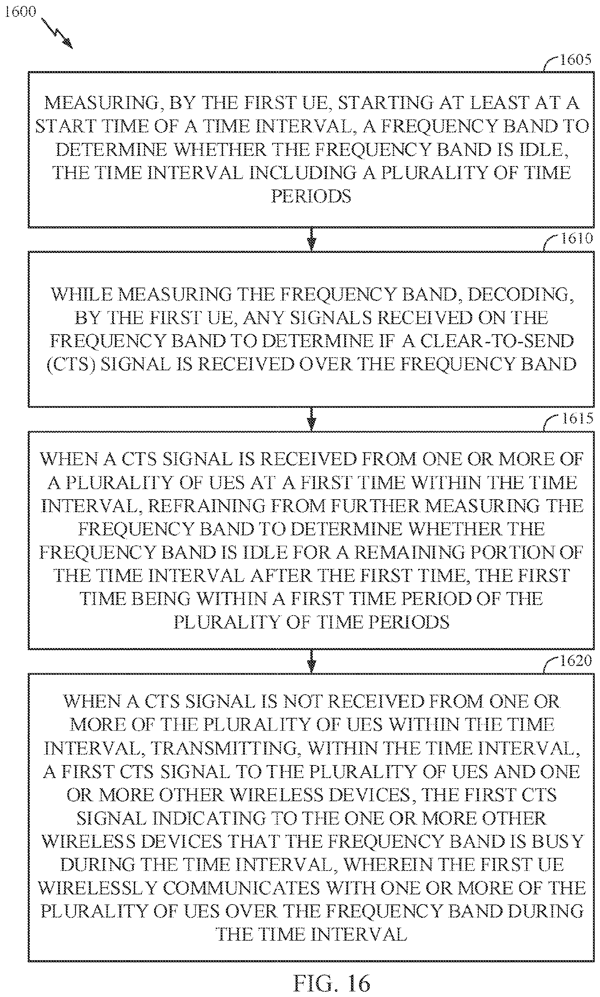

**FIG. 16** is a flow diagram illustrating operations 1600 for wireless communication. The operations 1600 are performed, for example, by a first wireless device acting as an originating wireless device (e.g., such as a UE 120a over a sidelink). Operations 1600 may be implemented as software components of a reservation manager 140 that is executed and run on one or more processors (e.g., controller/processor 240/280 of **FIG. 2**). Further, the transmission and reception of signals by the first wireless device in operations 1600 may be enabled, for example, by one or more antennas (e.g., antennas 234/252 of **FIG. 2**). In certain aspects, the transmission and/or reception of signals by the first wireless device may be implemented via a bus interface of one or more processors (e.g., controller/processor 240/280) obtaining and/or outputting signals.

In the claimed embodiment, the operations 1600 begin, at block 1605, by measuring, by the first UE, starting at least at a start time of a time interval, a frequency band to determine whether the frequency band is idle, the time interval including a plurality of time periods.

In the claimed embodiment, the operations 1600 proceed at block 1610 by, while measuring the frequency band, decoding, by the first UE, any signals received on the frequency band to determine if a clear-to-send (CTS) signal is received over the frequency band.

In the claimed embodiment, the operations 1600 proceed at block 1615 by, when a CTS signal is received from one or more of a plurality of UEs at a first time within the time interval, refraining from further measuring the frequency band to determine whether the frequency band is idle for a remaining portion of the time interval after the first time, the first time being within a first time period of the plurality of time periods.

In the claimed embodiment, the operations 1600 proceed at block 1620 by, when a CTS signal is not received from one or more of the plurality of UEs within the time interval, transmitting, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval, wherein timing of communications between the first UE and the one or more of the plurality of UEs are aligned with the plurality of time periods.

In certain aspects, the operations 1600 further comprise, when a physical sidelink control channel signal is received at a second time in the time interval, refraining from further measuring the frequency band to determine whether the frequency band is idle for a remaining portion of the time interval after the second time.

In certain aspects, wherein when a CTS signal is not received during the time interval, transmitting the first CTS signal comprises transmitting the first CTS signal after the physical sidelink control channel signal is received at the second time.

In certain aspects, the operations 1600 further comprise, when the CTS signal is received at the first time of the time interval, transmitting a second CTS signal over a last symbol within in a second time period that immediately follows the first time period.

In certain aspects, the operations 1600 further comprise, when the CTS signal is received at the first time of the time interval, transmitting an additional CTS signal over each symbol that occurs after the first time and during the first time period.

In certain aspects, the frequency band comprises a sidelink in an unlicensed spectrum.

In certain aspects, the operations 1600 further comprise synchronizing timing between the first UE and at least a second UE of the plurality of UEs using one or more of: a global navigation satellite system (GNSS) time reference shared by each of the plurality of UEs and the first UE; or signaling internal clock information between the first UE and one or more of the plurality of UEs.

In certain aspects, measuring the frequency band comprises determining that the frequency band is idle; and transmitting the first CTS signal to the plurality of UEs comprises refraining from transmitting the first CTS signal to the plurality of UEs until after a backoff period, the backoff period being a duration of time between the determination that the frequency band is idle and transmission of the first CTS signal.

In certain aspects, the operations 1600 further comprise randomly generating, by the first UE, the duration of the backoff period.

In certain aspects, the operations 1600 further comprise randomly generating the duration of the backoff period based on a global positioning system (GPS) signal.

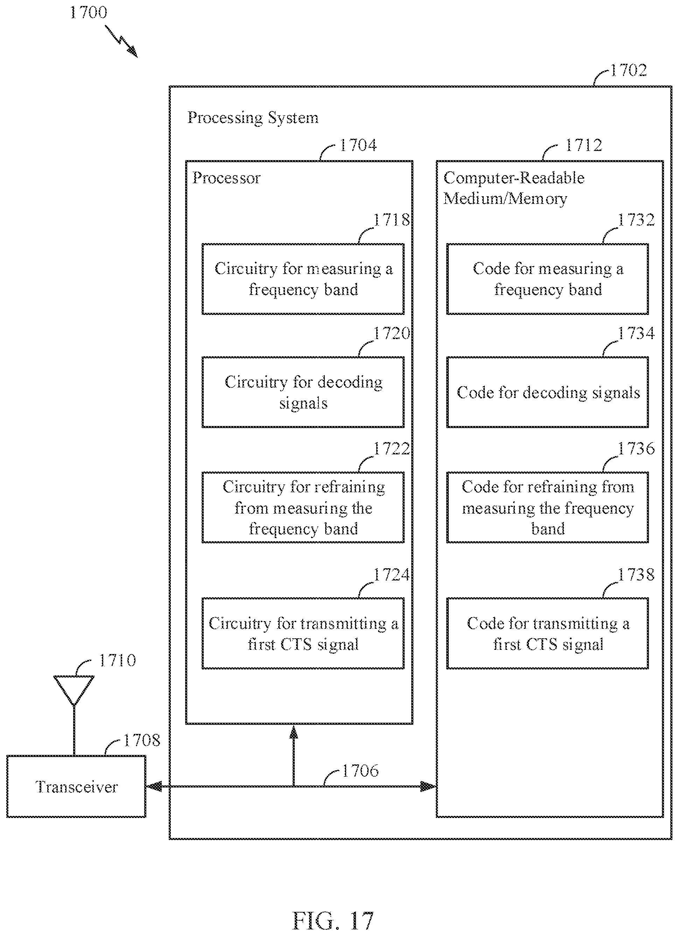

**FIG. 17** illustrates a communications device 1700 that may include various components (e.g., corresponding to means-plus-function components) configured to perform operations for the techniques disclosed herein, such as the operations illustrated in **FIG. 17****.** The communications device 1700 includes a processing system 1702 coupled to a transceiver 1708 (e.g., a transmitter and/or a receiver). The transceiver 1708 is configured to transmit and receive signals for the communications device 1700 via an antenna 1710, such as the various signals as described herein. The processing system 1702 may be configured to perform processing functions for the communications device 1700, including processing signals received and/or to be transmitted by the communications device 1700.

The processing system 1702 includes a processor 1704 coupled to a computer-readable medium/memory 1712 via a bus 1706. In certain aspects, the computer-readable medium/memory 1712 is configured to store instructions (e.g., computer-executable code) that when executed by the processor 1704, cause the processor 1704 to perform the operations illustrated in **FIG. 17****,** or other operations for performing the various techniques discussed herein for performing sidelink communications in unlicensed bands.

In certain aspects, computer-readable medium/memory 1712 stores code 1732 for (e.g., an example of means for) measuring, by the first UE, starting at least at a start time of a time interval, a frequency band to determine whether the frequency band is idle, the time interval including a plurality of time periods.

In certain aspects, computer-readable medium/memory 1712 stores code 1734 for (e.g., an example of means for) while measuring the frequency band, decoding, by the first UE, any signals received on the frequency band to determine if a clear-to-send (CTS) signal is received over the frequency band.

In certain aspects, computer-readable medium/memory 1712 stores code 1736 for (e.g., an example of means for) when a CTS signal is received from one or more of a plurality of UEs at a first time within the time interval, refraining from further measuring the frequency band to determine whether the frequency band is idle for a remaining portion of the time interval after the first time, the first time being within a first time period of the plurality of time periods.

In certain aspects, computer-readable medium/memory 1712 stores code 1738 for (e.g., an example of means for) when a CTS signal is not received from one or more of the plurality of UEs within the time interval, transmitting, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval. One or more of code 1732-1738 may be executed by a general-purpose processor, a digital signal processor (DSP), an application-specific integrated circuit (ASIC), a field programmable gate array (FPGA) or other programmable logic device. In certain aspects, the processor 1704 executes the code stored in the computer-readable medium/memory 1712. In certain aspects, computer-readable medium/memory 1712 is an example of a reservation manager 140.

In certain aspects, alternatively or additionally, the processor 1704 has circuitry configured to implement the code stored in the computer-readable medium/memory 1712. The processor 1704 includes circuitry 1718 for (e.g., an example of means for) measuring, by the first UE, starting at least at a start time of a time interval, a frequency band to determine whether the frequency band is idle, the time interval including a plurality of time periods.

The processor 1704 includes circuitry 1720 for (e.g., an example of means for), while measuring the frequency band, decoding, by the first UE, any signals received on the frequency band to determine if a clear-to-send (CTS) signal is received over the frequency band.

The processor 1704 includes circuitry 1722 for (e.g., an example of means for), when a CTS signal is received from one or more of a plurality of UEs at a first time within the time interval, refraining from further measuring the frequency band to determine whether the frequency band is idle for a remaining portion of the time interval after the first time, the first time being within a first time period of the plurality of time periods.

The processor 1704 includes circuitry 1724 for (e.g., an example of means for), when a CTS signal is not received from one or more of the plurality of UEs within the time interval, transmitting, within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval. One or more of circuitry 1718-1724 may be implemented by one or more of a general-purpose processor, a digital signal processor (DSP), an application-specific integrated circuit (ASIC), a field programmable gate array (FPGA) or other programmable logic device. In certain aspects, processor 1704 is an example of a reservation manager 140.

The transceiver 1708 may provide a means for receiving information such as packets, user data, or control information associated with various information channels (e.g., control channels, data channels, and information related to power saving of smart repeaters based on a triggering signal, etc.). Information may be passed on to other components of the device 1700. The transceiver 1708 may be an example of aspects of the transceiver 232/254 described with reference to FIG. 2. The antenna 1710 may correspond to a single antenna or a set of antennas, and may be an example of aspects of the antennas 234/252 described with reference to FIG. 2. The transceiver 1708 may provide means for transmitting signals generated by other components of the device 1700.

### Additional Considerations

The techniques described herein may be used for various wireless communication technologies, such as NR (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

In 3GPP, the term "cell" can refer to a coverage area of a Node B (NB) and/or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

Within the present document, the term "user equipment (UE)" or "CV2X device" broadly refers to a diverse array of devices and technologies. UEs and CV2X devices may include a number of hardware structural components sized, shaped, and arranged to help in communication; such components can include antennas, antenna arrays, RF chains, amplifiers, one or more processors, etc. electrically coupled to each other. For example, some non-limiting examples of a UE or CV2X device include a mobile, a cellular (cell) phone, a smart phone, a session initiation protocol (SIP) phone, a laptop, a personal computer (PC), a notebook, a netbook, a smartbook, a tablet, a personal digital assistant (PDA), and a broad array of embedded systems, e.g., corresponding to an "Internet of things" (IoT). A UE or CV2X device may additionally be an automotive or other transportation vehicle, a remote sensor or actuator, a robot or robotics device, a satellite radio, a global positioning system (GPS) device, an object tracking device, a drone, a multi-copter, a quad-copter, a remote control device, a consumer and/or wearable device, such as eyewear, a wearable camera, a virtual reality device, a smart watch, a health or fitness tracker, a digital audio player (e.g., MP3 player), a camera, a game console, etc. A UE or CV2X device may additionally be a digital home or smart home device such as a home audio, video, and/or multimedia device, an appliance, a vending machine, intelligent lighting, a home security system, a smart meter, etc. A UE or CV2X device may additionally be a smart energy device, a security device, a solar panel or solar array, a municipal infrastructure device (e.g., a smart grid, public WiFi, etc.), an industrial automation and enterprise device, a logistics controller, agricultural equipment, military defense equipment: vehicles, aircraft, ships, and weaponry, etc. Still further, a UE or CV2X device may provide for connected medicine or telemedicine support, e.g., health care at a distance. Telehealth devices may include telehealth monitoring devices and telehealth administration devices, whose communication may be given preferential treatment or prioritized access over other types of information, e.g., in terms of prioritized access for transport of critical service data, and/or relevant QoS for transport of critical service data.

Within the present document, the term "non-CV2X device" broadly refers devices and technologies that use a wireless communication technology that is different from that used by CV2X devices. For example, non-CV2X devices may communicate using IEEE 802.11 protocols to form a wireless local area network (WLAN), while CV2X devices may communicate according to cellular radio protocols (e.g., GSM, LTE, 5G, etc.). Examples of non-CV2X devices include WiFi routers, WiFi bridges, WiFi cards, and any other suitable devices utilizing an IEEE 802.11 protocol for communication.

In some examples, access to the air interface may be scheduled. A scheduling entity (e.g., a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

The methods disclosed herein comprise one or more operations or actions for achieving the methods. The operations and/or actions may be interchanged with one another. In other words, unless a specific order of operations or actions is specified, the order and/or use of specific operations and/or actions may be modified.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the physical (PHY) layer. In the case of a user terminal (see **FIG. 1**), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise a non-transitory computer-readable medium (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIG. 16****.**

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

## Claims

1. A method of wireless communication by a first user equipment, UE, the method comprising:
measuring (1605), by the first UE, starting at least at a start time of a time interval, a frequency band to determine whether the frequency band is idle, the time interval including a plurality of time periods;
while measuring (1610) the frequency band, decoding, by the first UE, any signals received on the frequency band to determine if a clear-to-send, CTS, signal is received over the frequency band;
when a CTS signal is received from one or more of a plurality of UEs at a first time within the time interval, refraining (1615) from further measuring the frequency band to determine whether the frequency band is idle for a remaining portion of the time interval after the first time, the first time being within a first time period of the plurality of time periods; and
when a CTS signal is not received from one or more of the plurality of UEs within the time interval, transmitting (1620), within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval; and
wherein timing of communications between the first UE and the one or more of the plurality of UEs are aligned with the plurality of time periods.

2. The method of claim 1, further comprising, when a physical sidelink control channel signal is received at a second time in the time interval, refraining from further measuring the frequency band to determine whether the frequency band is idle for a remaining portion of the time interval after the second time.

3. The method of claim 2, wherein when a CTS signal is not received during the time interval, transmitting the first CTS signal comprises transmitting the first CTS signal after the physical sidelink control channel signal is received at the second time.

4. The method of claim 1, further comprising when the CTS signal is received at the first time of the time interval, transmitting a second CTS signal over a last symbol within a second time period that immediately follows the first time period.

5. The method of claim 1, further comprising when the CTS signal is received at the first time of the time interval, transmitting an additional CTS signal over each symbol that occurs after the first time and during the first time period.

6. The method of claim 1, wherein the frequency band comprises a sidelink in an unlicensed spectrum.

7. The method of claim 1, further comprising synchronizing timing between the first UE and at least a second UE of the plurality of UEs using one or more of:
a global navigation satellite system, GNSS, time reference shared by each of the plurality of UEs and the first UE; or
signaling internal clock information between the first UE and one or more of the plurality of UEs.

8. The method of claim 1, wherein:
measuring the frequency band comprises determining that the frequency band is idle; and
transmitting the first CTS signal to the plurality of UEs comprises refraining from transmitting the first CTS signal to the plurality of UEs until after a backoff period, the backoff period being a duration of time between the determination that the frequency band is idle and transmission of the first CTS signal.

9. The method of claim 8, further comprising randomly generating, by the first UE, the duration of the backoff period.

10. The method of claim 9, further comprising randomly generating the duration of the backoff period based on a global positioning system, GPS, signal.

11. A first user equipment, UE, for wireless communication, comprising:
means for measuring (1605), starting at least at a start time of a time interval, a frequency band to determine whether the frequency band is idle, the time interval including a plurality of time periods;
means for decoding (1610), while measuring the frequency band, any signals received on the frequency band to determine if a clear-to-send, CTS, signal is received over the frequency band;
when a CTS signal is received from one or more of a plurality of UEs at a first time within the time interval, means for refraining (1615) from further measuring the frequency band to determine whether the frequency band is idle for a remaining portion of the time interval after the first time, the first time being within a first time period of the plurality of time periods; and
when a CTS signal is not received from one or more of the plurality of UEs within the time interval, means for transmitting (1620), within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval; and
wherein timing of communications between the first UE and the one or more of the plurality of UEs are aligned with the plurality of time periods.

12. The first user equipment, UE, of claim 11 further comprising means configured to carry out the method of any of claims 2 to 10.

13. The first user equipment, UE of claim 12 wherein the means comprises:
a memory; and
a processor coupled to the memory, wherein the memory and the processor are configured to carry out the method of any of claims 2 to 10.

14. A non-transitory computer-readable storage medium for wireless communications implemented by a first UE, comprising code for:
measuring (1605), by the first UE, starting at least at a start time of a time interval, a frequency band to determine whether the frequency band is idle, the time interval including a plurality of time periods;
while measuring the frequency band, decoding (1610), by the first UE, any signals received on the frequency band to determine if a clear-to-send, CTS, signal is received over the frequency band;
when a CTS signal is received from one or more of a plurality of UEs at a first time within the time interval, refraining (1615) from further measuring the frequency band to determine whether the frequency band is idle for a remaining portion of the time interval after the first time, the first time being within a first time period of the plurality of time periods; and
when a CTS signal is not received from one or more of the plurality of UEs within the time interval, transmitting (1620), within the time interval, a first CTS signal to the plurality of UEs and one or more other wireless devices, the first CTS signal indicating to the one or more other wireless devices that the frequency band is busy during the time interval, wherein the first UE wirelessly communicates with one or more of the plurality of UEs over the frequency band during the time interval; and
wherein timing of communications between the first UE and the one or more of the plurality of UEs are aligned with the plurality of time periods.

15. The non-transitory computer-readable storage medium of claim 14 further comprising code for carrying out the method of any of claims 2 to 10.

## Patentansprüche

1. Ein Verfahren zur drahtlosen Kommunikation durch ein erstes Benutzergerät, UE, wobei das Verfahren Folgendes aufweist:
Messen (1605) eines Frequenzbands durch das erste UE zur Bestimmung, ob das Frequenzband ungenutzt ist, beginnend zumindest zu einem Startzeitpunkt eines Zeitintervalls, wobei das Zeitintervall mehrere Zeitspannen einschließt;
Dekodieren sämtlicher auf dem Frequenzband empfangener Signale durch das erste UE während der Messung (1610) des Frequenzbands zur Bestimmung, ob über das Frequenzband ein Sendefreigabesignal, CTS-Signal, empfangen wird;
Unterlassen (1615) des weiteren Messens des Frequenzbands zur Bestimmung, ob das Frequenzband ungenutzt ist, über einen verbleibenden Teil des Zeitintervalls nach dem ersten Zeitpunkt, wenn von einem oder mehreren unter mehreren UEs zu einem ersten Zeitpunkt innerhalb des Zeitintervalls ein CTS-Signal empfangen wird, wobei der erste Zeitpunkt innerhalb einer ersten Zeitspanne unter den mehreren Zeitspannen liegt; und
Senden (1620) eines ersten CTS-Signals an die mehreren UEs und eine oder mehrere weitere drahtlose Vorrichtungen innerhalb des Zeitintervalls, wenn innerhalb des Zeitintervalls kein CTS-Signal von einem oder mehreren unter den mehreren UEs empfangen wird, wobei das erste CTS-Signal der einen oder den mehreren weiteren drahtlosen Vorrichtungen anzeigt, das das Frequenzband während des Zeitintervalls belegt ist, wobei das erste UE während des Zeitintervalls über das Frequenzband drahtlos mit einem oder mehreren unter den mehreren UEs kommuniziert; und
wobei das Timing der Kommunikation zwischen dem erste UE und dem einen oder den mehreren unter den mehreren UEs mit den mehreren Zeitspannen abgeglichen ist.

2. Verfahren nach Anspruch 1, das ferner das Unterlassen eines weiteren Messens des Frequenzbands zur Bestimmung, ob das Frequenzband ungenutzt ist, für einen verbleibenden Teil des Zeitintervalls nach dem zweiten Zeitpunkt aufweist, wenn zu einem zweiten Zeitpunkt in dem Zeitintervall ein physisches Sidelink-Steuerkanalsignal empfangen wird.

3. Verfahren nach Anspruch 2, wobei das Senden des ersten CTS-Signals das Senden des ersten CTS-Signals nach dem Empfangen des physischen Sidelink-Steuerkanalsignals zu dem zweiten Zeitpunkt aufweist, wenn während des Zeitintervalls kein CTS-Signal empfangen wird.

4. Verfahren nach Anspruch 1, das ferner das Senden eines zweiten CTS-Signals über mindestens ein Symbol innerhalb einer zweiten Zeitspanne aufweist, die unmittelbar auf die erste Zeitspanne folgt, wenn das CTS-Signal zu dem ersten Zeitpunkt des Zeitintervalls empfangen wird.

5. Verfahren nach Anspruch 1, das ferner das Senden eines zusätzlichen CTS-Signals über jedes Symbol aufweist, das nach dem ersten Zeitpunkt und während der ersten Zeitspanne auftritt, wenn das CTS-Signal zu dem ersten Zeitpunkt des Zeitintervalls empfangen wird.

6. Verfahren nach Anspruch 1, wobei das Frequenzband einen Sidelink in einem nicht lizensierten Spektrum aufweist.

7. Verfahren nach Anspruch 1, das ferner das Synchronisieren des Timings zwischen dem ersten UE und mindestens einem zweiten UE unter den mehreren UEs unter Verwendung eines oder mehrerer unter Folgendem aufweist:
einer globalen Navigationssatellitensystem-Zeitreferenz, GNSS-Zeitreferenz, die von jedem der mehreren UEs und dem ersten UE geteilt wird; oder
einem Signalisieren von internen Taktinformationen zwischen dem erstem UE und einem oder mehreren unter den mehreren UEs.

8. Verfahren nach Anspruch 1, wobei:
das Messen des Frequenzbands das Bestimmen aufweist, dass das Frequenzband ungenutzt ist; und
das Senden des ersten CTS-Signals an die mehreren UEs das Unterlassen des Sendens des ersten CTS-Signals an die mehreren UEs bis nach einer Backoff-Zeitspanne aufweist, wobei die Backoff-Zeitspanne eine Dauer der Zeit zwischen der Bestimmung, dass das Frequenzband ungenutzt ist, und dem Senden des ersten CTS-Signals ist.

9. Verfahren nach Anspruch 8, das ferner das zufällige Erzeugen der Dauer der Backoff-Zeitspanne durch das erste UE aufweist.

10. Verfahren nach Anspruch 9, das ferner das zufällige Erzeugen der Dauer der Backoff-Zeitspanne basierend auf einem Global-Positioning-System-Signal, GPS-Signal, aufweist.

11. Ein erstes Benutzergerät, UE, zur drahtlosen Kommunikation, das Folgendes aufweist:
Mittel zum Messen (1605) eines Frequenzbands zur Bestimmung, ob das Frequenzband ungenutzt ist, beginnend zumindest zu einem Startzeitpunkt eines Zeitintervalls, wobei das Zeitintervall mehrere Zeitspannen einschließt;
Mittel zum Decodieren (1610) sämtlicher auf dem Frequenzband empfangener Signale zur Bestimmung, ob über das Frequenzband ein Sendefreigabesignal, CTS-Signal, empfangen wird, während der Messung des Frequenzbands;
Mittel zum Unterlassen (1615) des weiteren Messens des Frequenzbands zur Bestimmung, ob das Frequenzband ungenutzt ist, für einen verbleibenden Teil des Zeitintervalls nach dem ersten Zeitpunkt, wenn zu einem ersten Zeitpunkt innerhalb des Zeitintervalls von einem oder mehreren unter mehreren UEs ein CTS-Signal empfangen wird, wobei der erste Zeitpunkt innerhalb einer ersten Zeitspanne unter den mehreren Zeitspannen liegt; und
Mittel zum Senden (1620) eines ersten CTS-Signals an die mehreren UEs und eine oder mehrere andere drahtlose Vorrichtungen innerhalb des Zeitintervalls, wenn innerhalb des Zeitintervalls kein CTS-Signal von einem oder mehreren unter den mehreren UEs empfangen wird, wobei das erste CTS-Signal der einen oder den mehreren drahtlosen Vorrichtungen anzeigt, dass das Frequenzband während des Zeitintervalls belegt ist, wobei das erste UE während des Zeitintervalls über das Frequenzband drahtlos mit einem oder mehreren unter den mehreren UEs kommuniziert; und
wobei das Timing der Kommunikation zwischen dem ersten UE und dem einen oder den mehreren unter den mehreren UEs mit den mehreren Zeitspannen abgeglichen ist.

12. Erstes Benutzergerät, UE, nach Anspruch 11, das ferner Mittel aufweist, die so konfiguriert sind, dass Sie das Verfahren nach einem der Ansprüche 2 bis 10 ausführen.

13. Erstes Benutzergerät, UE, nach Anspruch 12, wobei die Mittel Folgendes aufweisen:
einen Speicher; und
einen mit dem Speicher verbundenen Prozessor, wobei der Speicher und der Prozessor so konfiguriert sind, dass sie das Verfahren nach einem der Ansprüche 2 bis 10 ausführen.

14. Ein nichtflüchtiges computerlesbares Speichermedium zur durch ein erstes UE implementierten drahtlosen Kommunikation, das einen Code für Folgendes aufweist:
Messen (1605) eines Frequenzbands durch das erste UE zur Bestimmung, ob das Frequenzband ungenutzt ist, beginnend mit einem Startzeitpunkt eines Zeitintervalls, wobei das Zeitintervall mehrere Zeitspannen einschließt;
Decodieren (1610) sämtlicher auf dem Frequenzband empfangener Signale durch das erste UE zur Bestimmung, ob ein Sendefreigabesignal, CTS-Signal, über das Frequenzband empfangen wird, während der Messung des Frequenzbands;
Unterlassen (1615) eines weiteren Messens des Frequenzbands zur Bestimmung, ob das Frequenzband ungenutzt ist, für einen verbleibenden Teil des Zeitintervalls nach dem ersten Zeitpunkt, wenn zu einem ersten Zeitpunkt innerhalb des Zeitintervalls ein CTS-Signal von einem oder mehreren unter mehreren UEs empfangen wird, wobei der erste Zeitpunkt innerhalb einer ersten Zeitspanne unter den mehreren Zeitspannen liegt; und
Senden (1620) eines ersten CTS-Signals an die mehreren UEs und eine oder mehrere andere drahtlose Vorrichtungen innerhalb des Zeitintervalls, wenn innerhalb des Zeitintervalls kein CTS-Signal von einem oder mehreren unter den mehreren UEs empfangen wird, wobei das erste CTS-Signal der einen oder den mehreren weiteren drahtlosen Vorrichtungen anzeigt, dass das Frequenzband während des Zeitintervalls belegt ist, wobei das erste UE während des Zeitintervalls über das Frequenzband drahtlos mit einem oder mehreren unter den mehreren UEs kommuniziert; und
wobei das Timing der Kommunikation zwischen dem ersten UE und dem einen oder den mehreren unter den mehreren UEs mit den mehreren Zeitspannen abgeglichen ist.

15. Nichtflüchtiges computerlesbares Speichermedium nach Anspruch 14, das ferner Code aufweist, um das Verfahren nach einem der Ansprüche 2 bis 10 ausführen.

## Revendications

1. Un procédé de communication sans fil par un premier équipement utilisateur, UE, le procédé comprenant les étapes consistant à :
mesurer (1605), par le premier UE, en commençant au moins à un moment de début d'un intervalle de temps, une bande de fréquences pour déterminer si la bande de fréquences est inactive, l'intervalle de temps comprenant une pluralité de périodes de temps ;
tout en mesurant (1610) la bande de fréquences, décoder, par le premier UE, tout signal reçu sur la bande de fréquences pour déterminer si un signal indiquant que la voie est libre, CTS, est reçu sur la bande de fréquences ;
lorsqu'un signal CTS est reçu d'un ou de plusieurs d'une pluralité d'UE à un premier moment dans l'intervalle de temps, s'abstenir (1615) de mesurer davantage la bande de fréquences pour déterminer si la bande de fréquences est inactive pendant une partie restante de l'intervalle de temps après le premier moment, le premier moment étant dans une première période de temps de la pluralité de périodes de temps ; et
lorsqu'un signal CTS n'est pas reçu d'un ou de plusieurs de la pluralité d'UE dans l'intervalle de temps, transmettre (1620), dans l'intervalle de temps, un premier signal CTS à la pluralité d'UE et à un ou plusieurs autres dispositifs sans fil, le premier signal CTS indiquant à l'un ou aux plusieurs autres dispositifs sans fil que la bande de fréquences est occupée pendant l'intervalle de temps, dans lequel le premier UE communique sans fil avec un ou plusieurs de la pluralité d'UE sur la bande de fréquences pendant l'intervalle de temps ; et
dans lequel le moment des communications entre le premier UE et l'un ou plusieurs de la pluralité d'UE est aligné sur la pluralité de périodes de temps.

2. Le procédé selon la revendication 1, comprenant en outre, lorsqu'un signal de canal de commande de liaison latérale physique est reçu à un deuxième moment dans l'intervalle de temps, le fait de s'abstenir de mesurer davantage la bande de fréquences pour déterminer si la bande de fréquences est inactive pendant une partie restante de l'intervalle de temps après le deuxième moment.

3. Le procédé selon la revendication 2, dans lequel, lorsqu'un signal CTS n'est pas reçu pendant l'intervalle de temps, la transmission du premier signal CTS comprend la transmission du premier signal CTS après que le signal de canal de commande de liaison latérale physique a été reçu au deuxième moment.

4. Le procédé selon la revendication 1, comprenant en outre, lorsque le signal CTS est reçu au premier moment de l'intervalle de temps, la transmission d'un deuxième signal CTS sur un dernier symbole dans une deuxième période de temps qui suit immédiatement la première période de temps.

5. Le procédé selon la revendication 1, comprenant en outre, lorsque le signal CTS est reçu au premier moment de l'intervalle de temps, la transmission d'un signal CTS supplémentaire sur chaque symbole qui se produit après le premier moment et pendant la première période de temps.

6. Le procédé selon la revendication 1, dans lequel la bande de fréquences comprend une liaison latérale dans un spectre sans licence.

7. Le procédé selon la revendication 1, comprenant en outre la synchronisation de la temporisation entre le premier UE et au moins un deuxième UE de la pluralité d'UE en utilisant un ou plusieurs des éléments suivants :
une référence temporelle de système mondial de navigation par satellite, GNSS, partagée par chacun de la pluralité d'UE et le premier UE ; ou
la signalisation d'informations d'horloge interne entre le premier UE et un ou plusieurs de la pluralité d'UE.

8. Le procédé selon la revendication 1, dans lequel :
la mesure de la bande de fréquences comprend la détermination que la bande de fréquences est inactive ; et
la transmission du premier signal CTS à la pluralité d'UE comprend le fait de s'abstenir de transmettre le premier signal CTS à la pluralité d'UE jusqu'après un délai de transmission, le délai de transmission étant une durée de temps entre la détermination que la bande de fréquences est inactive et la transmission du premier signal CTS.

9. Le procédé selon la revendication 8, comprenant en outre la génération aléatoire, par le premier UE, de la durée du délai de transmission.

10. Le procédé selon la revendication 9, comprenant en outre la génération aléatoire de la durée du délai de transmission sur la base d'un signal de système de positionnement global, GPS.

11. Un premier équipement utilisateur, UE, pour la communication sans fil, comprenant :
des moyens pour mesurer (1605), en commençant au moins à un moment de début d'un intervalle de temps, une bande de fréquences pour déterminer si la bande de fréquences est inactive, l'intervalle de temps comprenant une pluralité de périodes de temps ;
des moyens de décodage (1610), tout en mesurant la bande de fréquences, de tous les signaux reçus sur la bande de fréquences pour déterminer si un signal indiquant que la voie est libre, CTS, est reçu sur la bande de fréquences ;
lorsqu'un signal CTS est reçu d'un ou de plusieurs d'une pluralité d'UE à un premier moment dans l'intervalle de temps, des moyens pour s'abstenir (1615) de mesurer davantage la bande de fréquences pour déterminer si la bande de fréquences est inactive pendant une partie restante de l'intervalle de temps après le premier moment, le premier moment étant dans une première période de temps de la pluralité de périodes de temps ; et
lorsqu'un signal CTS n'est pas reçu d'un ou de plusieurs de la pluralité d'UE dans l'intervalle de temps, des moyens pour transmettre (1620), dans l'intervalle de temps, un premier signal CTS à la pluralité d'UE et à un ou plusieurs autres dispositifs sans fil, le premier signal CTS indiquant à l'un ou aux plusieurs autres dispositifs sans fil que la bande de fréquences est occupée pendant l'intervalle de temps, dans lequel le premier UE communique sans fil avec un ou plusieurs de la pluralité d'UE sur la bande de fréquences pendant l'intervalle de temps ; et
dans lequel le moment des communications entre le premier UE et l'un ou plusieurs de la pluralité d'UE est aligné sur la pluralité de périodes de temps.

12. Premier équipement d'utilisateur, UE, selon la revendication 11, comprenant en outre des moyens configurés pour mettre en œuvre le procédé selon l'une quelconque des revendications 2 à 10.

13. Premier équipement d'utilisateur, UE, selon la revendication 12, dans lequel les moyens comprennent :
une mémoire ; et
un processeur couplé à la mémoire, la mémoire et le processeur étant configurés pour mettre en œuvre le procédé selon l'une quelconque des revendications 2 à 10.

14. Un support de stockage non transitoire lisible par ordinateur pour les communications sans fil mises en œuvre par un premier UE, comprenant un code pour :
mesurer (1605), par le premier UE, en commençant au moins à un moment de début d'un intervalle de temps, une bande de fréquences pour déterminer si la bande de fréquences est inactive, l'intervalle de temps comprenant une pluralité de périodes de temps ;
tout en mesurant la bande de fréquences, décoder (1610), par le premier UE, tout signal reçu sur la bande de fréquences pour déterminer si un signal indiquant que la voie est libre, CTS, est reçu sur la bande de fréquences ;
lorsqu'un signal CTS est reçu d'un ou de plusieurs d'une pluralité d'UE à un premier moment dans l'intervalle de temps, s'abstenir (1615) de mesurer davantage la bande de fréquences pour déterminer si la bande de fréquences est inactive pendant une partie restante de l'intervalle de temps après le premier moment, le premier moment étant dans une première période de temps de la pluralité de périodes de temps ; et
lorsqu'un signal CTS n'est pas reçu d'un ou de plusieurs de la pluralité d'UE dans l'intervalle de temps, transmettre (1620), dans l'intervalle de temps, un premier signal CTS à la pluralité d'UE et à un ou plusieurs autres dispositifs sans fil, le premier signal CTS indiquant à l'un ou plusieurs autres dispositifs sans fil que la bande de fréquences est occupée pendant l'intervalle de temps, dans lequel le premier UE communique sans fil avec un ou plusieurs de la pluralité d'UE sur la bande de fréquences pendant l'intervalle de temps ; et
dans lequel le moment des communications entre le premier UE et l'un ou plusieurs de la pluralité d'UE est aligné sur la pluralité de périodes de temps.

15. Le support de stockage non transitoire lisible par ordinateur selon la revendication 14, comprenant en outre du code pour mettre en œuvre le procédé selon l'une quelconque des revendications 2 à 10.
